# EUROPÄISCHE PATENTANMELDUNG

(11) **EP 4 455 054 A1**
(43) Veröffentlichungstag der Anmeldung: **30.10.2024**
(21) Anmeldenummer: 24170612.6
(22) Anmeldetag: 16.04.2024
(51) Int. Cl.: B65G 1/04, B65G 1/06

(54) **LAGER- UND ENTNAHMESYSTEM SOWIE VERFAHREN ZUM BETREIBEN EINES LAGER- UND ENTNAHMESYSTEMS**

(30) Priorität: 26.04.2023 DE 102023203875
(71) Anmelder: Gebhardt Fördertechnik GmbH, D-74889 Sinsheim (DE)
(72) Erfinder: Gebhardt, Marco, 74889 Sinsheim (DE); Eder, Jörg, 67661 Kaiserslautern (DE)
(74) Vertreter: Ullrich & Naumann PartG mbB

(57) **Zusammenfassung**

Ein Lager- und Entnahmesystem für Ladungsträger, umfasst ein Regallager (12) mit einer Mehrzahl von sich in einer Längsrichtung (x) erstreckenden Lagerregalen (14), die in einer oder mehreren übereinanderliegenden Regalebenen (16) Lagerplätze (18) für Ladungsträger (20) aufweisen, wobei einige der Lagerregale (14) in einer Querrichtung (z) beabstandet zueinander angeordnet sind, derart, dass zwischen den jeweiligen Lagerregalen (14) eine Regalgasse (22) ausgebildet ist. Im Hinblick auf einen besonders effektiven Betrieb umfasst das Lager- und Entnahmesystem weiterhin eine oberhalb des Regallagers (12) angeordnete horizontale Gitterstruktur (26), wobei die Gitterstruktur (26) Längstransportwege (28a) in der Längsrichtung (x) der Lagerregale (12) und Quertransportwege (28b) in der Querrichtung (z) der Lagerregale (12) definiert, sowie mindestens ein zum Fahren auf der Gitterstruktur (26) entlang der Längstransportwege (28a) und/oder der Quertransportwege (28b) ausgebildetes Transportfahrzeug (32) für Ladungsträger (20), wobei das Transportfahrzeug (32) eine in die Regalgasse (22) absenkbare Lifteinrichtung (50) sowie ein mit der Lifteinrichtung (50) gekoppeltes oder koppelbares Lastaufnahmemittel, LAM (52), für Ladungsträger (20) aufweist, wobei das LAM (52) zur seitlichen Aufnahme eines Ladungsträgers (20) von einem Lagerplatz (18) bzw. zur seitlichen Abgabe eines Ladungsträgers (20) an einen Lagerplatz (18) ausgebildet ist.

## Beschreibung

Die Erfindung betrifft ein Lager- und Entnahmesystem für Ladungsträger, umfassend ein Regallager mit einer Mehrzahl von sich in einer Längsrichtung erstreckenden Lagerregalen, die in einer oder mehreren übereinanderliegenden Regalebenen Lagerplätze für Ladungsträger aufweisen, wobei einige der Lagerregale in einer Querrichtung beabstandet zueinander angeordnet sind, derart, dass zwischen den jeweiligen Lagerregalen eine Regalgasse ausgebildet ist.

Des Weiteren betrifft die vorliegende Erfindung ein Verfahren zum Betreiben eines derartigen Lager- und Entnahmesystems.

Bei Lager- und Entnahmesysteme der hier in Rede stehenden Art befindet sich das Lagergut üblicherweise in Lagerbehältern, welche in Regalen gelagert werden, die in Regalreihen angeordnet sind. Jeder Lagerbehälter enthält dabei ein oder mehrere Produkte eines bestimmten Produkttyps. Die Bedienung eines solchen Warenlagers erfolgt über Freiräume zwischen den Regalreihen, den sogenannten Lagergassen, in denen mittels eines Transportsystems, bspw. einem Regalbediengerät oder einem Shuttle-System, die einzelnen Regalfächer angefahren werden können. Da die Lagergassen für die eigentliche Lagerung nicht zur Verfügung stehen, ist die Lagerdichte derartiger Warenlager relativ niedrig. Mit anderen Worten ist die Größe des tatsächlich für die Lagerung von Produkten zur Verfügung stehenden Raums relativ klein im Vergleich zu der Größe des Raums, der für das Warenlager als Ganzes erforderlich ist.

Zur Verbesserung derartiger herkömmliche Warenlager insbesondere im Hinblick auf die realisierbare Lagerdichte sind spezielle automatische Blocklagersysteme entwickelt worden. Bei diesen Blocklagern werden die Lagerbehälter nicht mehr in konventionellen Regalen gelagert, sondern die Lagerbehälter werden in einem selbsttragenden modularen Raster, welches vertikale Schächte definierter Größe bildet, übereinandergestapelt. Die Stapel sind dabei in einer Längsrichtung und in einer Querrichtung in Reihen angeordnet. Auf die einzelnen Lagerbehälter wird von oben mittels geeigneter Transportfahrzeuge zugegriffen, die sich auf entsprechenden Fahrschienen bewegen, die in Form einer 2D Matrix auf der Regalstruktur angeordnet sind. Dementsprechend müssen zwischen den Reihen keine Lagergassen ausgebildet sein, weshalb diese Lagerstruktur eine deutliche Verbesserung der Lagerungsdichte bietet.

Als nachteilig erweist sich jedoch, dass diese Art Blocklager nur für die oberste Ebene an Behältern einen direkten Zugriff bieten. Da Behälter für deren Zugriff oft ausgegraben werden müssen, steigt die mittlere Zugriffszeit auf die Behälter. Deshalb werden automatische Blocklager oftmals mit gassengebundenen Lagern wie beispielsweise einem Zeilenregal kombiniert, da derartige Zeilenregale einen Direktzugriff auf gelagerte, einzelne Behälter erlauben und daher einzelne Behälter mithilfe solcher Zeilenregale deutlich schneller an eine Zielposition gebracht werden können als im Fall eines reinen Blocklagers. Eine alternativ mögliche Pufferung oder Vorsortierung von Behältern im Blocklager erfordert hingegen ein Stapeln der Behälter im Blocklager, wodurch sich die Zugriffszeit nur sehr wenig verbessern lässt. Eine Verbindung von Blocklager und Zeilenlager oder Zeilenregal erfolgt im Stand der Technik meist mit einem zusätzlichen Fördertechnik-Loop und gegebenenfalls mit Senkrechtförderern im Blocklager, um die Behälter auf unterschiedliche Lagerebenen zu bringen. Diese zusätzliche Technik ist aufwendig und teuer und erfordert eine separate Steuerung und weitere Materialflussrechnerkompetenzen oder - ressourcen. Weiterhin nachteilig ist, dass in Blocklagern der genannten Art ausschließlich stapelbare Behälter als Ladungsträger eingesetzt werden können.

Der vorliegenden Erfindung liegt daher die Aufgabe zugrunde, ein Lager- und Entnahmesystem für Ladungsträger sowie ein Verfahren zum Betreiben eines Lager- und Entnahmesystems für Ladungsträger anzugeben, wonach ein besonders effektiver Betrieb des Lager- und Entnahmesystems mit konstruktiv einfachen Mitteln ermöglicht ist.

Erfindungsgemäß wird die voranstehende Aufgabe durch ein Lager- und Entnahmesystem mit den Merkmalen des Anspruchs 1 und durch ein Verfahren zum Betreiben eines Lager- und Entnahmesystems mit den Merkmalen des nebengeordneten Anspruchs 14 gelöst.

Danach ist das Lager- und Entnahmesystem gemäß Anspruch 1 gekennzeichnet durch eine oberhalb des Regallagers angeordnete horizontale Gitterstruktur, wobei die Gitterstruktur Längstransportwege in der Längsrichtung der Lagerregale und Quertransportwege in der Querrichtung der Lagerregale definiert; sowie mindestens ein zum Fahren auf der Gitterstruktur entlang der Längstransportwege und/oder der Quertransportwege ausgebildetes Transportfahrzeug für Ladungsträger, wobei das Transportfahrzeug eine in die Regalgasse absenkbare Lifteinrichtung sowie ein mit der Lifteinrichtung gekoppeltes oder koppelbares Lastaufnahmemittel, LAM, für Ladungsträger aufweist, wobei das LAM zur seitlichen Aufnahme eines Ladungsträgers von einem Lagerplatz bzw. zur seitlichen Abgabe eines Ladungsträgers an einen Lagerplatz ausgebildet ist.

Das Verfahren gemäß Anspruch 14 umfasst die Schritte Transportieren eines Ladungsträgers von einem Lagerplatz des Ladungsträgers in einem Lagerregal durch die Gitterstruktur hindurch bis zu einer Ziel- oder Übergabeposition auf der Gitterstruktur durch das mindestens eine Transportfahrzeug; und/oder Transportieren eines Ladungsträgers von einer Quell- oder Übernahmeposition auf der Gitterstruktur durch die Gitterstruktur hindurch bis zu einem Lagerplatz des Ladungsträgers in einem Lagerregal durch das mindestens eine Transportfahrzeug.

In erfindungsgemäßer Weise ist zunächst erkannt worden, dass die voranstehende Aufgabe durch eine geschickte Anordnung der Lagerregale und einer Gitterstruktur mit darauf operierenden Transportfahrzeugen relativ zueinander auf überraschend einfache Weise gelöst wird. Im Konkreten ist erfindungsgemäß vorgesehen, dass oberhalb des Regallagers eine Gitterstruktur angeordnet ist, auf der sich Transportfahrzeuge (im Rahmen der vorliegenden Offenbarung manchmal auch als Transportroboter oder als Gridroboter bezeichnet) entlang von durch die Gitterstruktur definierten Längs- und Quertransportwegen oberhalb des Regallagers bewegen können. Die Transportfahrzeuge sind eingerichtet, dass sie über eine von oberhalb der Gitterstruktur in die Regalgasse absenkbare Lifteinrichtung verfügen, wobei die Lifteinrichtung mittelbar oder unmittelbar mit einem LAM gekoppelt ist. Das LAM ist an die in dem jeweiligen Regallager gelagerten Ladungsträger angepasst und eingerichtet, einen Ladungsträger von einem Lagerplatz seitlich aufzunehmen bzw. einen Ladungsträger auf einen Lagerplatz seitlich abzugeben. Dementsprechend ist in erfindungsgemäßer Weise ein Betrieb des Lager- und Entnahmesystems realisierbar, wonach ein in dem Regallager eingelagerter Ladungsträger von einem Transportfahrzeug an seinem Lagerplatz aufgenommen wird, innerhalb der Regalgasse auf ein Niveau oberhalb der Gitterstruktur angehoben wird und sodann auf der Gitterstruktur zielgesteuert weitertransportiert wird. Umgekehrt ist es möglich, dass ein Ladungsträger von einem Transportfahrzeug aufgenommen wird (bspw. an einem Arbeitsplatz), durch die Gitterstruktur hindurch in eine Regalgasse abgesenkt wird und seitlich auf einem Lagerplatz abgestellt wird. Der Transport von Ladungsträgern erfolgt dabei durchgehend, d.h. vom Lagerplatz im Lagerregal zu einer Zielposition auf der Gitterstruktur oder umgekehrt von einer Position auf der Gitterstruktur zum Lagerplatz im Lagerregal, ausschließlich mit den Transportfahrzeugen. Für alle genannten Operationen wird demnach in vorteilhafter Weise nur ein einziger Robotertyp benötigt.

Das erfindungsgemäße Lager- und Entnahmesystem kann ohne zusätzliche Komponenten wie Fördertechnik und Senkrechtförderer als reines "Roboterlager" (d.h. ausschließlich auf Basis der Transportfahrzeuge auf der Gitterstruktur) realisiert werden. Im Vergleich zu einem Blocklager der eingangs beschriebenen Art bietet das erfindungsgemäße Lager- und Entnahmesystem u.a. den Vorteil eines Direktzugriffs auf die Behälter (d.h. ein frei "Buddeln" von Behältern durch die Transportfahrzeuge wie in einem Blocklager entfällt). Hinzu kommt, dass durch die erfindungsgemäße Kombination eines klassischen Regallagers und der Gitterstruktur mit darauf operierenden Transportrobotern eine Entkopplung von Lagerbereich einerseits und Arbeitsplätzen andererseits stattfinden kann, wodurch zum einen zusätzliche Abläufe im Regallager ermöglicht werden (wie bspw. ein Verdichten bei zweifachtiefer Lagerung). Zum anderen kann das Lager mit einer - im Vergleich zu einem reinen Blocklager - reduzierte Anzahl von Transportfahrzeugen bzw. -robotern betrieben werden, wodurch wiederum die Wartungsintensität reduziert ist. Weiterhin reduziert sich die Zugriffszeit, d.h. die Zeit von einer Behälteranforderung bis zur Behälterandienung am Arbeitsplatz, deutlich. Zudem kann das erfindungsgemäße Lager- und Entnahmesystem bis knapp unter das Hallendach gebaut werden, was bei einem herkömmlichen Blocklager aufgrund des zur Störungsbeseitigung auf dem Blocklager zwingend notwendigen Zugangs nicht möglich ist - dies ist positiv für die Lagerdichte.

Folglich sind mit dem erfindungsgemäßen Lager- und Entnahmesystem und dem erfindungsgemäßen Verfahren zum Betreiben eines Lager- und Entnahmesystems ein Lager- und Entnahmesystem und ein Verfahren bereitgestellt, wonach ein besonders effektiver Betrieb des Lager- und Entnahmesystems mit konstruktiv einfachen Mitteln ermöglicht ist.

In diesem Dokument ist mit dem Begriff "Ladungsträger" (manchmal auch als Ladehilfsmittel, LHM, bezeichnet) jegliches Behältnis oder jegliche Aufnahmeeinrichtung umfasst, das oder die zum Lagern und/oder Transportieren von Fördergut oder Lagergut geeignet ist, insbesondere auch Behältnisse, die aufgrund fehlender Stapelfähigkeit für einen Einsatz in einem Blocklager nicht infrage kommen. So können die Ladungsträger beispielsweise Behälter, Kisten, Tablare, Kartons, Tüten, Versandtaschen oder sogar Paletten umfassen. Es sind insbesondere keine proprietären Behälter notwendig, vielmehr muss lediglich gewährleistet sein, dass die Behälter von dem Lastaufnahmemittel der Transportfahrzeuge aufgenommen und abgegeben werden können Dies kann bspw. erfolgen durch Greifen von oben von an der Oberseite der Behälter ausgebildeten Greifschächten oder Aussparungen. Alternativ kann dies erfolgen durch eine aus dem Shuttle- oder RBG-Bereich bekannte LAM-Technik, bei der ein seitliches Greifen an einer vorderen Seite durch Griffleiste oder Aussparungen am Behälter oder Tablar realisiert ist. Denkbar ist des Weiteren ein Anheben und Ein-/Ausfahren mit einem Teleskop von einfachen Behältern oder Paletten oder Tablaren (d.h. ohne Greifen). Diese Technik ist für sich gesehen bekannt aus dem RBG-Bereich und durch den ohnehin vorhandenen Hub im Transportfahrzeug im Kontext der vorliegenden Offenbarung gut umsetzbar. Ebenfalls denkbar ist mit einem beidseitigen Schwert seitlich am Ladungsträger (Behälter, Tablar, Karton, Versandtasche, ...) vorbeizufahren und über klappbare Finger den Ladungsträger zu ziehen oder schieben (wie für sich gesehen aus dem Shuttle-Bereich bekannt, s. z.B. EP 3 286 111 B1). Weiterhin denkbar, insbesondere für die Handhabung von Versandtüten, ist auch der Einsatz von ineinandergreifenden "Kämmen", wobei hierzu sowohl das Regal als auch das LAM jeweils einen Kamm aufweist, die versetzt zueinander ineinander fahren können. Im Eingriff hebt das LAM aus und hat dann den Ladungsträger auf seinem Kamm.

Im Hinblick auf einen effizienten Lagerbetrieb bieten sich Behälter mit Länge und Höhe in einem vorgegebenen Raster an (bspw. 600x400 mm). Was die Höhe der Behälter anbelangt, so können grundsätzlich auch unterschiedliche Behälterhöhen in dem Regallager gelagert werden. Auch Behälter mit unterschiedlicher Grundfläche sind, bis zu einer durch das jeweils eingesetzte Lastaufnahmemittel handhabbaren Maximalgröße, grundsätzlich möglich.

Im Hinblick auf eine möglichst einfache Konstruktion kann vorgesehen sein, dass die Lagerregale, was die grundsätzliche Konstruktion anbelangt, als klassische Steherregale ausgebildet sind. Dementsprechend umfassen die Lagerregale vertikale Steher mit horizontalen Auflagen, die als Lagerplätze fungieren, wobei die Auflagen das Gewicht der Ladungsträger aufnehmen und dieses in die Steher einleiten. Je nach Art der Ladungsträger können die Auflagen beispielsweise als Auflagewinkel oder Auflagepunkte (geeignet bspw. für Kisten, Tablare oder Paletten) oder alternativ als Auflagebleche oder -panele ausgeführt sein. Unabhängig von der konkreten Art der Auflage kann vorgesehen sein, dass die Auflage derart ausgebildet ist, dass sie einen Ladungsträger durch geeignete Schrägen oder Führungen derart positioniert, dass etwaige verschobene Behälter (bspw. durch versehentliches Anstoßen durch Lagerpersonal bei der Kommissionierung) weiterhin sicher greifbar sind.

In einer Ausführungsform umfasst das Lager- und Entnahmesystem eine Mehrzahl von Transportfahrzeugen. Generell kann das Lager- und Entnahmesystem derart ausgestaltet sein, dass jedes einzelne der Transportfahrzeuge Zugriff auf alle Ladungsträger des Regallagers hat.

Im Rahmen eines konkreten Ausführungsbeispiels kann vorgesehen sein, dass die Lifteinrichtung des Transportfahrzeugs mit einer eine Hubplattform oder einen Hubwagen umfassenden Hubeinrichtung für Ladungsträger gekoppelt ist. Das LAM kann dabei auf der Hubplattform oder im Inneren des Hubwagens angeordnet sein. Der Hubwagen kann bspw. ein kastenförmiges, in seiner Dimensionierung an die Breite der Regalgasse sowie das Raster der Lagerregale (d.h. die Breite der Lagerplätze) angepasstes Gehäuse aufweisen. Das LAM kann dann einen Transfer eines Ladungsträgers von seinem Lagerplatz im Lagerregal in das Innere des Hubwagens (oder umgekehrt) bewerkstelligen.

Insgesamt sind die Größenverhältnisse des Lager- und Entnahmesystems derart aufeinander abgestimmt, dass die Hubeinrichtung mitsamt Ladungsträger (d.h. bspw. ein Hubwagen mit darin aufgenommenem Ladungsträger oder eine Hubplattform mit auf der Plattform positioniertem Ladungsträger) mittels der Lifteinrichtung des Transportfahrzeugs durch eine der von der Gitterstruktur ausgebildeten Gitterzellen hindurch auf ein Niveau oberhalb der Gitterstruktur angehoben (bzw. entsprechend durch die Gitterstruktur hindurch in eine Regalgasse abgesenkt) werden kann.

Die konkrete Ausgestaltung des LAM kann in an sich bekannter Weise an die jeweils konkret eingesetzte Art der Ladungsträger angepasst sein. So kann in einem Ausführungsbeispiel das LAM bspw. als Greif- und/oder Zieheinrichtung ausgeführt sein. Ein Greifer-LAM kann bspw. ein Schwert mit Klappfingern aufweisen, wobei das Schwert zur Realisierung einer Teleskopfunktion mehrteilig ausgebildet sein kann. Alternativ können auch spezielle Behälter zum Einsatz kommen, welche eine Griffleiste aufweisen, die von dem LAM gegriffen werden kann. Gemäß einer weiteren Alternative können LAMs vorgesehen sein, die eine seitlich ein- und ausfahrbare Einheit aufweisen, welche eingerichtet ist, die Ladungsträger zu unterfahren und anzuheben. Es sei an dieser Stelle angemerkt, dass dem Fachmann aus dem Stand der Technik die unterschiedlichsten LAM-Varianten bekannt sind (Teleskop, Teleskop mit (Riemen-)Förderer, Multigreifer, Greiftechnik, Sauggreifer, um Kartons usw. anzusaugen anstatt zu greifen, etc.) und dass die vorliegende Erfindung hinsichtlich der Auswahl einer konkreten LAM-Variante grundsätzlich keinerlei Beschränkungen unterliegt. Denkbar ist auch der Einsatz eines "Multi-LAM", welches die Funktionalität des Greifens von Behältern von oben (wie im klassischen Blocklager realisiert) und die Funktionalität des seitlichen Greifens von Behältern miteinander kombiniert.

Im Rahmen eines konkreten Ausführungsbeispiels kann sogar vorgesehen sein, dass anstelle eines klassischen LAM wie oben erläutert, ein Satellitenfahrzeug bzw. Shuttle zum Einsatz kommt, welches sich von der Hubeinrichtung lösen kann und - quasi als separater Roboter - eingerichtet ist, quer zur Regalgasse in einen Lagerkanal einzufahren und von dort einen Ladungsträger aufzunehmen bzw. dort abzustellen. Eine solche Variante bietet sich insbesondere in Kombination mit einer mehrfachtiefen Lagerung im Lagerregal an, d.h. in einer Situation, in der die quer zur Regalgasse verlaufenden Lagerkanäle mehrere hintereinander angeordnete Lagerplatz aufweisen. Um einen hinteren Ladungsträger zu erreichen kann je nach Lagersituation zunächst eine Umlagerung von Ladungsträgern erforderlich sein ("horizontales Buddeln").

Gemäß konkreten Ausführungsformen kann das LAM ausgebildet sein, wie - für sich gesehen - beispielsweise in der WO 2016/172793 A1 (dort in Zusammenhang mit Fig. 6) oder in der EP 2 662 318 A1 (dort insbesondere in Zusammenhang mit Fig. 4) beschrieben, wobei der diesbezügliche Inhalt der genannten Anmeldungen hiermit in diese Anmeldung aufgenommen wird.

Im Hinblick auf einen zuverlässigen Betrieb der Hubeinrichtung mitsamt LAM kann vorgesehen sein, dass deren Energieversorgung über die Lifteinrichtung des Transportfahrzeugs erfolgt. Konkret kann die Stromübertragung über Stahlbänder der Lifteinrichtung erfolgen, welche bspw. mittels Schleifkohlen bestromt werden. Die Stahlbänder haben üblicherweise einen Querschnitt von 3 mm², was für eine Übertragung der benötigten Leistung ausreichend wäre. Vorteilhaft ist, dass das LAM viel Strom zieht, wenn sich der Hubwagen bzw. generell die Hubeinrichtung nicht bewegt, also die Kohle ruhend auf dem Band aufliegt. Ein zusätzlicher Supercap am Hubwagen bzw. generell an der Hubeinrichtung als Puffer zur Reduktion von Spannungsspitzen (Anlaufstrom) wäre ebenfalls denkbar. Der Supercap könnte bspw. geladen werden, wenn das LAM im vollständig angehobenen Zustand oben am Transportfahrzeug positioniert ist. Des Weiteren kann vorgesehen, dass beim Absenken der Hubeinrichtung die generatorische Energie in einen Stromspeicher eingespeist wird.

In einer alternativen Ausgestaltung kann vorgesehen sein, dass als Tragmittel der Lifteinrichtung Flachriemen statt der oben genannten Stahlbänder eingesetzt werden, wobei direkt die Litzen bestromt werden könnten. Eine Rotation kann durch Schleifringe besser ausgeglichen werden als bei Bändern, wodurch im Ergebnis mehr Leistung zuverlässiger übertragbar ist.

Gemäß einer weiteren Alternative kann der Hubwagen mit einer eigenen Batterie ausgestattet sein und wäre somit autark. Die Batterie könnte im eingefahrenen Zustand aufgeladen werden. Weiterhin wäre denkbar, dass in (zumindest einigen) Stehern der Lagerregalen Schleifleitungen verbaut sind und somit eine Energieversorgung des Hubwagens über das Regal erfolgt. Auch könnte ein separates Stromversorgungskabel aufgerollt (wie bei einem Staubsauger) oder in Spiralen auf dem Hubwagen abgelegt sein.

Es versteht sich, dass die unterschiedlichen genannten Arten der Energieversorgung auch in geeigneter Weise miteinander kombiniert werden können.

Der Austausch von Signalen kann prinzipiell über das gleiche Prinzip wie die Energieversorgung erfolgen oder alternativ durch Funk zwischen Transportfahrzeug und Hubwagen.

Im Hinblick auf eine zuverlässige Ermittlung der aktuellen Höhe des Hubwagens (bzw. allgemein der Hubeinrichtung), relativ und/oder absolut zum Boden und/oder zum Transportfahrzeug, können unterschiedliche Techniken zum Einsatz kommen. Im Rahmen einer konkreten Ausführungsform können die Steher und/oder die Auflagen der Lagerregale über entsprechende Markierungen/Barcodes/o.ä. oder in regelmäßigen Abständen vorgesehene Löcher/Bohrungen verfügen, die von entsprechenden Sensoren der Hubeinrichtung erfasst werden können. Alternativ oder zusätzlich kann die Distanz zum Boden oder zum Transportfahrzeug mittels eines Lasers am Transportfahrzeug und eines entsprechenden Reflektors an der Hubeinrichtung (oder umgekehrt) ermittelt werden.

Im Hinblick auf einen besonders flexiblen Betrieb des Lager- und Entnahmesystems kann vorgesehen sein, dass die Hubeinrichtung, insbesondere in einer Ausführung als Hubwagen, als von der Lifteinrichtung des Transportfahrzeugs abkoppelbare autonome Einheit ausgebildet ist, die über eine eigene Energieversorgung verfügt. In diesem Zusammenhang kann vorgesehen sein, dass die Hubeinrichtung über ein geeignetes Fahrwerk verfügt, das eine selbstständige Aufwärts- und Abwärtsbewegung der Hubeinrichtung in der Regalgasse, losgelöst von der Lifteinrichtung des Transportfahrzeugs, ermöglicht. So könnte bspw. eine Klettertechnik vorgesehen sein, bei der die Hubeinrichtung ein Fahrwerk mit zahnradartigen Rädern aufweist, die mit vertikalen Zahnketten innerhalb der Regalgasse zusammenwirken, um so eine Kletterbewegung der Hubeinrichtung zu ermöglichen, wie dies für sich gesehen bspw. aus der WO 2018/189110 A1 bekannt ist. Durch Ausgestaltung der Hubeinrichtung als autonome Einheit ließen sich weitere Funktionalitäten realisieren, bspw. ein bodengebundener Weitertransport von aus den Lagerregalen entnommenen Ladungsträgern. Dabei könnte die Hubeinrichtung entweder über ein eigenes Fahrwerk für den bodengebundenen Transport verfügen oder es könnte vorgesehen sein, dass die Hubeinrichtung von anderen bodengebunden operierenden Robotern aufgenommen wird. Ein Abkoppeln der Hubeinrichtung von dem Transportfahrzeug kann prinzipiell an jeder beliebigen Position erfolgen, somit nicht nur in der Regalgasse, sondern auch bereits oberhalb der Gitterstruktur.

Sofern, wie oben beschrieben, Hubwagen und LAM autonom als eigenständige Maschine betrieben werden, kommen besondere Sicherheitsaspekte zum Tragen, da ein Abschalten über das Transportfahrzeug (als Hauptroboter) aufgrund der eigenen Energieversorgung und teilweise eigenen Steuerung des Hubwagens nicht einfach möglich ist. Gemäß einer Ausführungsform kann eine sichere Abschaltung des Hubwagens inklusive LAM über einen sicheren Funk von der zentralen Lagersteuerung zum Transportfahrzeug (Hauptroboter) und von dort zum Hubwagen oder alternativ direkt von der zentralen Lagersteuerung zum Hubwagen sichergestellt werden. Bei einer Störungsbeseitigung an einem Transportfahrzeug muss dieses und zusätzlich der Hubwagen sicher abgeschaltet werden.

Zu berücksichtigen ist in diesem Zusammenhang auch, dass ein Hubwagen in einer Regalgasse Personen in einer Nachbargasse gefährden und verletzen kann, z.B. wenn dieser einen Ladungsträger anschiebt und durchschiebt, so dass ein Ladungsträger (ähnlich wie bei Domino) in die Nachbargasse fällt. Das kann verhindert werden durch Durchschubsicherungen, durch Abschalten des Hubwagens und des Lastaufnahmemittels, und/oder durch eine sichere Richtungssteuerung des Lastaufnahmemittels nur in eine Richtung (also nicht in eine Richtung, in der Personen in einer Regalgasse sein könnten).

Im Hinblick auf einen sicheren Betrieb des Lagers ist grundsätzlich von Bedeutung, dass ein Abstürzen eines Hubwagens grundsätzlich verhindert werden kann, wenn dieser mittig über eine Schiene der Gitterstruktur positioniert wird. Gemäß einer Ausführungsform ist vorgesehen, dass im Falle eines Absturzes die Bänder bzw. Seile der Lifteinrichtung des Transportfahrzeugs, an denen der Hubwagen hängt, mit einer oder redundant mit mehreren Bremsen gestoppt werden, z.B. mittels einer ersten Bremse über Kreuz auf zwei der insgesamt vier Bänder, und ebenso über Kreuz mittels einer zweiten Bremse auf die beiden anderen Bänder). Alternativ könnte im Steher an den Führungselementen (s.u.) eine Fangvorrichtung vorgesehen werden, wie sie aus dem Stand der Technik von einem Aufzug oder einem RBG für sich gesehen bekannt ist. Alternativ könnte eine Positionierhilfe auch zum Bremsen genutzt werden. Hierzu kann eine formschlüssige Verbindung am Steher verwendet werden, wobei an dem rotierenden Teil ein Geber (Positionierung) und eine Bremse (Sicherheit Absturz) verbaut ist. Der Formschluss könnte ausgeführt werden durch eine Zahnstange oder Kette oder Zahnriemen am Steher und einem Zahnrad oder Kettenrad oder Zahnriemenrad am Hubwagen. Alternativ könnten Löcher in den Stehern verwendet werden, in welche Finger/Sicherheitsbolzen eingeklappt/eingesteckt werden. Wenn diese nicht aktiv gelüftet/eingezogen werden, so kann bei Stromausfall oder leerem Akku im Transportfahrzeug oder einer Abschaltung bzw. Störung aktiv der Hubwagen gegen Absturz gesichert werden. Die Finger oder Bolzen klappen/fahren aus und rasten am Steher ein, so dass ein Formschluss entsteht und der Hubwagen bremst. Im Gegensatz dazu beruht eine Fangvorrichtung auf Reibschluss.

In einer weiteren Ausführungsform kann eine alternative oder zusätzliche Sicherung des LAM bzw. der Hubeinrichtung dadurch realisiert werden, dass die Hubeinrichtung ein Zahnrad aufweist, welches bei der Vertikalbewegung innerhalb der Regalgasse in einem Lochmuster an den Lagerregalen abrollt. Das Lochmuster kann bspw. in die Regalsteher eingestanzt sein. Mittels eines Gebers kann so stets die Vertikalposition des LAM bzw. der Hubeinrichtung bestimmt werden. Eine Sicherung des LAM bzw. der Hubeinrichtung kann durch Bremsen des Zahnrades erfolgen.

Im Hinblick auf einen besonders sicheren und störungsfreien Betrieb des Lager- und Entnahmesystems kann vorgesehen sein, dass die Lagerregale regalgassenseitig Führungselemente zur vertikalen Führung der Lifteinrichtung des Transportfahrzeugs und/oder der Hubeinrichtung aufweisen, um ein mögliches Kippen, Verdrehen und/oder Verschieben des LAM zu verhindern. Im Rahmen einer konkreten Ausführungsform kann bspw. vorgesehen sein, dass die Führungselemente Führungsrollen umfassen, an denen die vertikal zu bewegenden Komponenten abrollen können (so insbesondere bspw. die äußeren Gehäusewände eines Hubwagens). Die Führungselemente können bspw. an den gassenseitigen Regalstehern der Lagerregale montiert werden. Alternativ oder zusätzlich könnten die Führungsrollen auch an der Hubeinrichtung vorgesehen sein und an den gassenseitigen Regalstehern abrollen.

Im Hinblick auf eine besonders einfache und leicht handhabbare Kopplung zwischen Regallager einerseits und der Gitterstruktur (bzw. etwaige daran ankoppelnde Arbeitsplätze) andererseits kann vorgesehen sein, dass die Gitterstruktur derart auf die Dimensionierung des Regallagers abgestimmt ist, dass jede Gitterzelle der Gitterstruktur mit einem oder mehreren der Lagerplätze korrespondiert. Es sei angemerkt, dass eine derartige Ausgestaltung in Abhängigkeit von der Größe der gelagerten Behälter sowie der konkreten Struktur des Regallagers u.U. dazu führen kann, dass den auf der Gitterstruktur operierenden Transportfahrzeugen, welche üblicherweise über eine vorgegebene unveränderliche Spurbreite in Längs- und Querrichtung verfügen, nicht alle existierenden Längs- und Quertransportwege tatsächlich zur Verfügung stehen. In einer konkreten Ausführungsform kann vorgesehen sein, dass die Gitterstruktur derart auf die Dimensionierung des Regallagers abgestimmt ist, dass jeder Lagerplatz für das mindestens eine Transportfahrzeug über eine Gitterzelle der Gitterstruktur erreichbar ist.

Zudem kann vorgesehen sein, dass die Gitterstruktur unterbrochen ist und, zumindest bereichsweise, keine Längstransportwege oder Quertransportwege aufweist. Auf diese Weise lassen sich zum einen durch die resultierenden Materialeinsparungen die Errichtungskosten des Lager- und Entnahmesystems reduzieren. Zum anderen entstehen durch die Unterbrechung unterschiedlich große Gitterzellen. Hier besteht die Möglichkeit, die Transportfahrzeuge bei Bedarf über die größeren der Gitterzellen auf einfache Weise nach unten abzulassen, bspw. zu Wartungs- oder Reparaturzwecken. Diese Möglichkeit ist in einem klassischen Blocklager so nicht gegeben.

Im Hinblick auf einen effektiven und flexiblen Betrieb des Lager- und Entnahmesystems kann im Rahmen eines konkreten Ausführungsbeispiels zudem vorgesehen sein, dass die Gitterstruktur zumindest einseitig über das Regallager hinausragt. Über einen derartigen überstehenden Bereich der Gitterstruktur lassen sich bspw. entfernte Arbeitsplätze und/oder ein weiteres Lager, bspw. ein Blocklager, anbinden.

Bei einem konkreten Ausführungsbeispiel kann die Gitterstruktur eine Anzahl von Gitterzellen aufweisen, die jeweils einem Arbeitsplatz (bspw. einem Kommissionier-Arbeitsplatz) mittelbar oder unmittelbar zugeordnet sind. Dabei kann vorgesehen sein, dass ein Transportfahrzeug eingerichtet ist, einen als Ziel-Ladungsträger definierten Ladungsträger von einem jeweiligen Lagerplatz aufzunehmen, nämlich mittels des in der jeweiligen Regalgasse auf ein entsprechendes Niveau abgesenkten LAM des Transportfahrzeugs, den Ziel-Ladungsträger sodann in der jeweiligen Regalgasse auf ein Niveau oberhalb der Gitterstruktur anzuheben und zu der Gitterzelle zu transportieren, die einem als Ziel-Arbeitsplatz definierten Arbeitsplatz zugeordnet ist.

Alternativ oder zusätzlich kann vorgesehen sein, dass mindestens eine Fördertechnik in das Regallager integriert ist, welche an einen oder mehrere Arbeitsplätze angekoppelt ist. Im Hinblick auf eine effektive Anordnung der Arbeitsplätze entlang der Längsseite des Regallagers ist die Fördertechnik in vorteilhafter Weise derart ausgelegt, dass sie in Querrichtung zu den Lagerregalen verläuft. Dabei kann vorgesehen sein, dass ein Transportfahrzeug eingerichtet ist, einen als Ziel-Ladungsträger definierten Ladungsträger wie oben beschrieben von einem jeweiligen Lagerplatz aufzunehmen, den Ziel-Ladungsträger in der jeweiligen Regalgasse auf ein Niveau oberhalb der Gitterstruktur anzuheben und an die jeweilige Fördertechnik abzugeben, welche an einen als Ziel-Arbeitsplatz definierten Arbeitsplatz ankoppelt.

Im Hinblick auf das erfindungsgemäße Verfahren zum Betreiben eines Lager- und Entnahmesystems kann im Rahmen eines konkreten Ausführungsbeispiels eine vorteilhafte Auslagerung von Ladungsträgern aus dem Regallager realisiert werden. Hierzu kann in einem ersten Schritt vorgesehen sein, dass ein bestimmter Ladungsträger als ein aus dem Lagerregal auszulagernder Ziel-Ladungsträger definiert wird. Daraufhin kann ein geeignetes Transportfahrzeug bestimmt werden und dieses kann eine durch den Lagerplatz des Ziel-Ladungsträgers definierte Arbeitsposition auf der Gitterstruktur anfahren. In dieser Arbeitsposition kann mittels der Lifteinrichtung des Transportfahrzeugs das LAM des Transportfahrzeugs in die Regalgasse abgesenkt werden, und zwar auf ein der Regalebene des Lagerplatzes des Ziel-Ladungsträgers entsprechendes Niveau. Dort kann das LAM den Ziel-Ladungsträger von seinem Lagerplatz seitlich aufnehmen. Sodann kann das LAM mitsamt Ziel-Ladungsträger mittels der Lifteinrichtung auf ein Niveau oberhalb der Gitterstruktur angehoben werden und von dort durch das Transportfahrzeug zu einer Ziel- oder Übergabeposition, vorzugsweise einem als Ziel-Arbeitsplatz definierten Arbeitsplatz, transportiert werden.

Umgekehrt kann im Rahmen eines konkreten Ausführungsbeispiels des erfindungsgemäßen Verfahrens auch eine vorteilhafte Einlagerung von Ladungsträgern in das Regallager realisiert werden. Hierzu kann in einem ersten Schritt vorgesehen sein, dass ein bestimmter Ladungsträger als ein in das Lagerregal einzulagernder Ziel-Ladungsträger definiert wird. Daraufhin kann ein geeignetes Transportfahrzeug bestimmt werden und dieses kann den Ziel-Ladungsträger von einer Quell- oder Übernahmeposition auf der Gitterstruktur aufnehmen und zu einer durch den (steuerungstechnisch vorbestimmten) Lagerplatz des Ziel-Ladungsträgers definierten Arbeitsposition auf der Gitterstruktur transportieren. In dieser Arbeitsposition kann der Ziel-Ladungsträger mittels der Lifteinrichtung des Transportfahrzeugs in die Regalgasse abgesenkt werden, und zwar auf ein der Regalebene des Lagerplatzes des Ziel-Ladungsträgers entsprechendes Niveau. Dort kann das LAM den Ziel-Ladungsträger seitlich auf den gewünschten Lagerplatz abgeben.

Dieser Ziel-Behälter kann sodann durch ein Transportfahrzeug an seiner Quellposition aufgenommen werden, zu einer Position auf der Gitterstruktur oberhalb eines Übergabeplatzes transportiert werden und von dort durch die Gitterstruktur hindurch auf den Übergabeplatz abgesenkt werden. Von dem Übergabeplatz kann der Ziel-Behälter in einem nächsten Schritt von einem jeweiligen Regalförderzeug aufgenommen und zu einem als Ziel-Lagerplatz definierten Lagerplatz des Regallagers transportiert werden.

Eine weitere Ausführungsform umfasst die für sich gesehen bekannte Idee einer automatisierten "PutWall". Demnach können einzelne Ladungsträger direkt im Regal mit weiteren Gegenständen gefüllt werden. Die Ein- und Auslagerung dieser Ladungsträger kann wie bisher beschrieben erfolgen, alternativ könnte auch manuell eine Person einen derart automatisch befüllten Behälter aus einer deaktivierten Regalgasse entnehmen. Die automatische Befüllung kann bevorzugt erfolgen, indem einige Regalebenen in vertikaler Richtung (y) einen vergrößerten Abstand aufweisen. So kann ein Lastaufnahmemittel, wie zuvor beschrieben z.B. ein Schwert mit klappbaren Fingern, oder alternativ ein klassischer Förderer (Rollenförderer, Gurtförderer, Gliederbandförderer, Kettenförderer) auf dem Hubwagen einen Gegenstand in einen Ladungsträger, bspw. einen Lagerbehälter, werfen. Dazu wird das Lastaufnahmemittel oder der klassische Förderer über dem zu befüllenden Ladungsträger in dem vergrößerten Freiraum zum Behälter darüber positioniert, danach wird ggf. zur Überbrückung des Spalts zum Behälter ein kurzes horizontales Ausfahren (z) in Behälterrichtung ausgeführt und dann der klassische Förderer bzw. das Lastaufnahmemittel aktiviert, so dass das Ladegut in den Ladungsträger fällt. Auf diese Weise kann sehr einfach eine automatische Sortierung erfolgen.

Vorteilhaft ist in der Praxis, dass ein Typ Transportfahrzeug die Ladungsträger ein- und auslagert und ein anderer Typ Transportfahrzeug die Ladegüter von einer Übergabestelle abholt und diese dann in die Ladungsträger abgibt bzw. wirft. Möglich ist allerdings auch, dass ein Transportfahrzeug beide Typen vereint. Die Übergabestelle ist vorteilhaft aus dem gleichen klassischen Förderer wie auf dem Hubwagen des Transportfahrzeugs aufgebaut, so dass z.B. einfach eine Übergabe vom Gurt des Übergabeförderers auf den Gurt des Hubwagens erfolgen kann. Die Bestückung des Übergabeförderers mit einem Ladegut kann manuell am Rand dieses Regals an einem Arbeitsplatz erfolgen. Z.B. kann eine Person aus einem von diesem System angelieferten Ladungsträger einen Gegenstand entnehmen und auf dem Übergabeförderer ablegen bzw. auf einer Fördertechnik, die es zu diesem transportiert. Alternativ kann die Bestückung des Übergabeförderers auch vollautomatisch durch einen Kommissionierroboter erfolgen.

Ein vollständig mit diversen Ladegütern befüllter Ladungsträger kann direkt ausgelagert bzw. von einer Person manuell oder einem fahrerlosen Transportsystem (=FTS) entnommen werden. Die Entnahme durch eine Person kann von der Rückseite eines Regals am Rand des Lager- und Entnahmesystems erfolgen, wo keine automatischen und gefährlichen Bewegungen erfolgen. Alternativ kann die manuelle Entnahme auch in einer Gasse erfolgen, die während des Zutritts deaktiviert und zudem gegen abstürzende Hubwagen gesichert ist. Weiter alternativ kann statt einer Person, aber auf die gleiche Weise, ein FTS aus dem Regal/PutWall einen Behälter entnehmen und abtransportieren. Das LAM auf dem FTS kann dem LAM auf dem Transportfahrzeug entsprechen.

Falls ein vollständig mit diversen Ladegütern befüllter Ladungsträger nicht direkt benötigt wird, ist die Umlagerung mit einem Transportfahrzeug in einen engen Lagerplatz, der keinen platzraubenden Freiraum in y aufweist, möglich.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Darstellung ein Ausführungsbeispiel eines erfindungsgemäßen Lager- und Entnahmesystems,
- Fig. 2: in einer perspektivischen Darstellung einen vergrößerten Ausschnitt des Lager- und Entnahmesystems nach Fig. 1,
- Fig. 3: in einer Draufsicht den grundsätzlichen Aufbau eines Lager- und Entnahmesystems mit doppeltiefer Lagerung gemäß einem Ausführungsbeispiel der Erfindung,
- Fig. 4: in einer Vorderansicht das Lager- und Entnahmesystem nach Fig. 3,
- Fig. 5: in einer Seitenansicht das Lager- und Entnahmesystem nach Fig. 3,
- Fig. 6: in einer Draufsicht das Lager- und Entnahmesystem nach Fig. 3 zusammen mit der Gitterstruktur,
- Fig. 7: in einer Draufsicht den grundsätzlichen Aufbau eines Lager- und Entnahmesystems mit einfachtiefer Lagerung gemäß einem Ausführungsbeispiel der Erfindung,
- Fig. 8: in einer Vorderansicht das Lager- und Entnahmesystem nach Fig. 7,
- Fig. 9: in einer Seitenansicht das Lager- und Entnahmesystem nach Fig. 7,
- Fig. 10: in einer Draufsicht das Lager- und Entnahmesystem nach Fig. 7 zusammen mit der Gitterstruktur,
- Fig. 11: in einer Draufsicht eine unregelmäßig ausgebildete Gitterstruktur eines Lager- und Entnahmesystems gemäß einem Ausführungsbeispiel der Erfindung,
- Fig. 12: in einer perspektivischen Darstellung ein Lager- und Entnahmesystem mit über das Regallager hinaus erweiterter Gitterstruktur gemäß einem Ausführungsbeispiel der Erfindung,
- Fig. 13: in einer ersten perspektivischen Darstellung ein Lager- und Entnahmesystem mit einer integrierten Fördertechnik gemäß einem Ausführungsbeispiel der Erfindung,
- Fig. 14: in einer schematischen Seitenansicht einen Reparatur- bzw. Bergungsvorgang eines Transportfahrzeugs in einem Lager- und Entnahmesystem gemäß einem Ausführungsbeispiel der Erfindung, und
- Fig. 15: in einer Draufsicht den Reparatur- bzw. Bergungsvorgang gemäß Fig. 14.

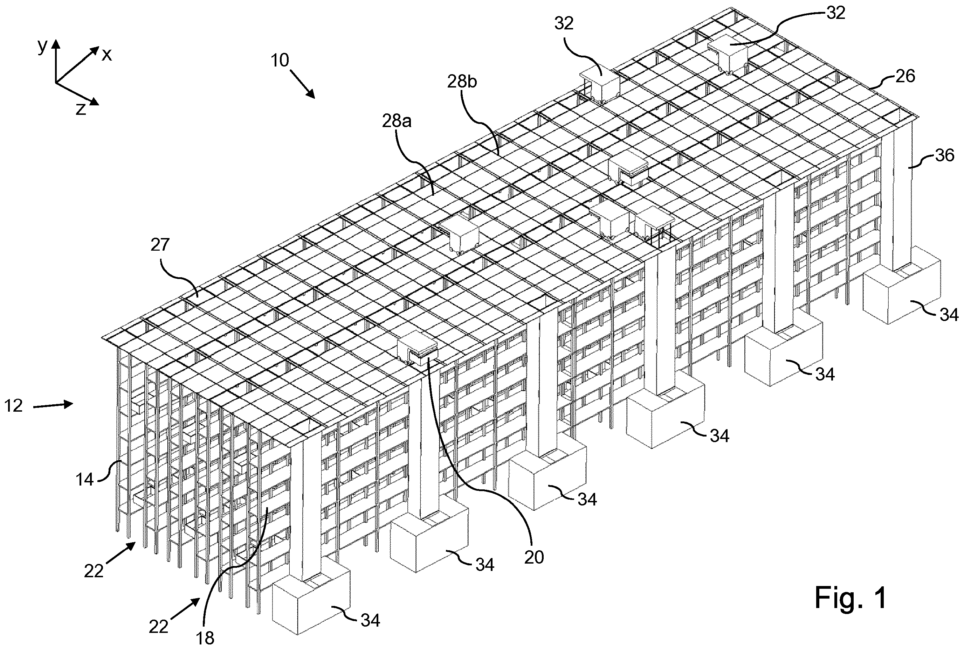

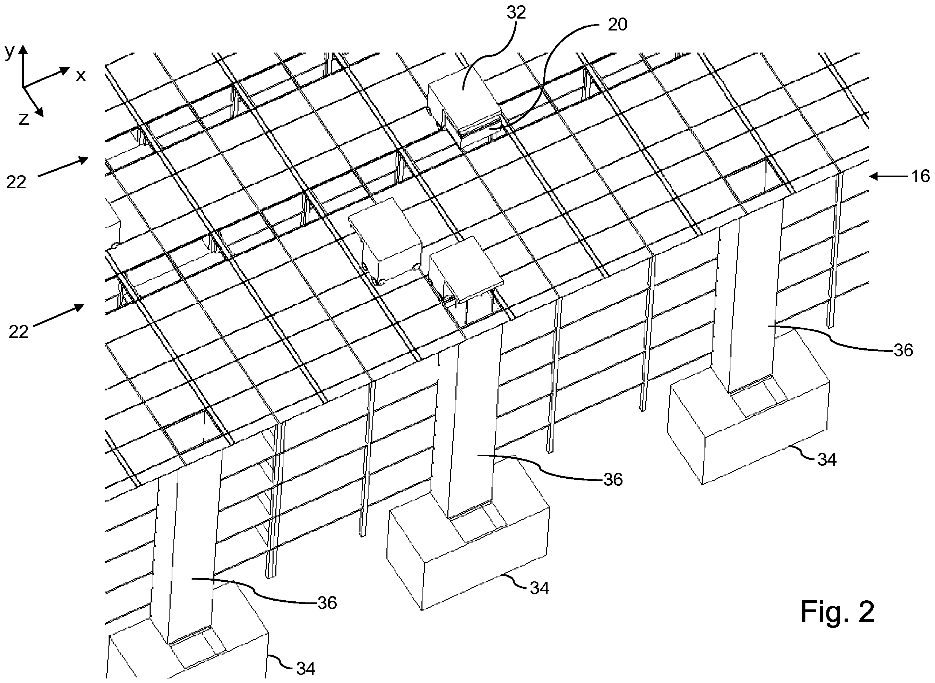

Die Fig. 1 und 2 zeigen in einer perspektivischen Darstellung ein Ausführungsbeispiel eines erfindungsgemäßen Lager- und Entnahmesystems 10 für Ladungsträger, wobei Fig. 2 einen vergrößerten Ausschnitt des Lager- und Entnahmesystems 10 zeigt. Das Lager- und Entnahmesystem 10 umfasst ein Regallager 12 mit einer Anzahl von sich in einer Längsrichtung (x) erstreckenden Lagerregalen 14, die in einer oder mehreren übereinanderliegenden Regalebenen 16 Lagerplätze 18 für Ladungsträger, im dargestellten Beispiel als Behälter 20 ausgeführt, aufweisen. Die Lagerregale 14 sind in einer Querrichtung (z) beabstandet zueinander angeordnet, derart, dass sich zwischen den jeweiligen Lagerregalen 14 eine Regalgasse 22 ergibt.

Die in Fig. 1 dargestellte Anzahl an Lagerregalen 14 sowie deren Länge und Höhe ist rein beispielhaft gewählt und es versteht sich, dass das Lager- und Entnahmesystem 10 eine größere oder kleinere Anzahl an Lagerregalen 14 aufweisen kann und dass diese über eine größere oder kleinere Anzahl von Regalebenen verfügen können. Grundsätzlich kann der zur Verfügung stehende Lagerraum durch das erfindungsgemäße Lager- und Entnahmesystem 10 optimal ausgenutzt werden, wie weiter unten im Detail beschrieben wird.

In erfindungsgemäßer Weise ist oberhalb des Regallagers 12 eine horizontale Gitterstruktur 26 angeordnet, wobei die Gitterstruktur 26 Längstransportwege 28a in der Längsrichtung (x) der Lagerregale 12 und Quertransportwege 28b in der Querrichtung (z) der Lagerregale 12 definiert. In weiter erfindungsgemäßer Weise operiert auf der Gitterstruktur 26 mindestens ein Transportfahrzeugen 32 für Ladungsträger/Behälter 20, das zur Fortbewegung entlang der Längstransportwege 28a und/oder der Quertransportwege 28b ausgebildet ist. Konkret umfasst das Transportfahrzeug 32 eine Anzahl von Rädern zur Fortbewegung entlang der Längs- und Quertransportwege 28a,b. Gemäß einem Ausführungsbeispiel können die Räder einen Satz x-Räder umfassen, die zur Fortbewegung entlang der Längstransportwege 28a eingerichtet sind, sowie einen Satz y-Räder, die zur Fortbewegung entlang der Quertransportwege 28b eingerichtet sind. In an sich bekannter Weise ist das Transportfahrzeuge 32 gemäß einem Ausführungsbeispiel derart ausgestaltet, dass die x-Räder bzw. die y-Räder selektiv mit den jeweiligen Transportwegen 28a,b in Kontakt gebracht werden können. Auf diese Weise sind Richtungswechsel des Transportfahrzeugs 32 auf der Gitterstruktur 26 ermöglicht.

Wie in den Fig. 1 und 2 zu erkennen, umfasst das Lager- und Entnahmesystems 10 gemäß dem dargestellten Ausführungsbeispiel eine Anzahl von Arbeitsplätzen 34, die bspw. als Kommissionier-Arbeitsplätze ausgestaltet sind. In der konkreten Ausgestaltung sind die Arbeitsplätzen 34 in Reihe entlang einer der Längsseiten des Regallagers 12 angeordnet. Die Arbeitsplätze 34 stehen jeweils über einen Kopplungsschacht 36 mit einer Gitterzelle 27 der Gitterstruktur 26 in Verbindung. Selbstverständlich können die Arbeitsplätze 34 auch an anderen Seiten des Regallagers 12 als in den Fig. 1 und 2 gezeigt angeordnet sein, insbesondere auch an mehreren oder sogar an allen Seiten.

Dementsprechend ist ein Betrieb ermöglicht, wonach ein Transportfahrzeug 24 einen Behälter 20, dessen Inhalt bspw. im Rahmen eines Kommissionierauftrags angefragt wird (Ziel-Behälter), von seinem Lagerplatz 18 mit dem innerhalb der jeweiligen Regalgasse 22 auf ein entsprechendes Niveau abgesenkten LAM 52 des Transportfahrzeugs aufnimmt, diesen sodann mittels der Lifteinrichtung 50 auf ein Niveau oberhalb der Gitterstruktur 26 anhebt und auf der Gitterstruktur 26 zu der mit dem jeweiligen Arbeitsplatz 34 korrespondierenden Gitterzelle 27 transportiert. Über den zugehörigen Kopplungsschacht 36 kann der Behälter 20 zu dem Arbeitsplatz 34 abgesenkt werden. Auf dem umgekehrten Weg kann ein Behälter 20, bspw. nach Abarbeitung eines Kommissionierauftrags, wieder in das Regallager 12 eingelagert werden.

Generell kann, wie durch das obige Beispiel veranschaulicht wird, durch das erfindungsgemäße Lager- und Entnahmesystem eine Funktionsintegration dahingehend stattfinden, dass die Transportfahrzeuge 32 sowohl die Ein- und Auslagerung von Ladungsträgern 20 als auch die Versorgung von Arbeitsplätzen mit Ladungsträgern 20 übernehmen. In klassischen Lagern sind diese Funktionen getrennt, wobei üblicherweise die Funktion des Lagerns von Regalbediengeräten (RBGs) oder Shuttlesystemen (wie bspw. OLS- oder MLS-Shuttles) ausgeführt wird, wohingegen Fördertechnik, ggf. im Zusammenspiel mit Hebern, die Versorgung der Arbeitsplätze übernehmen.

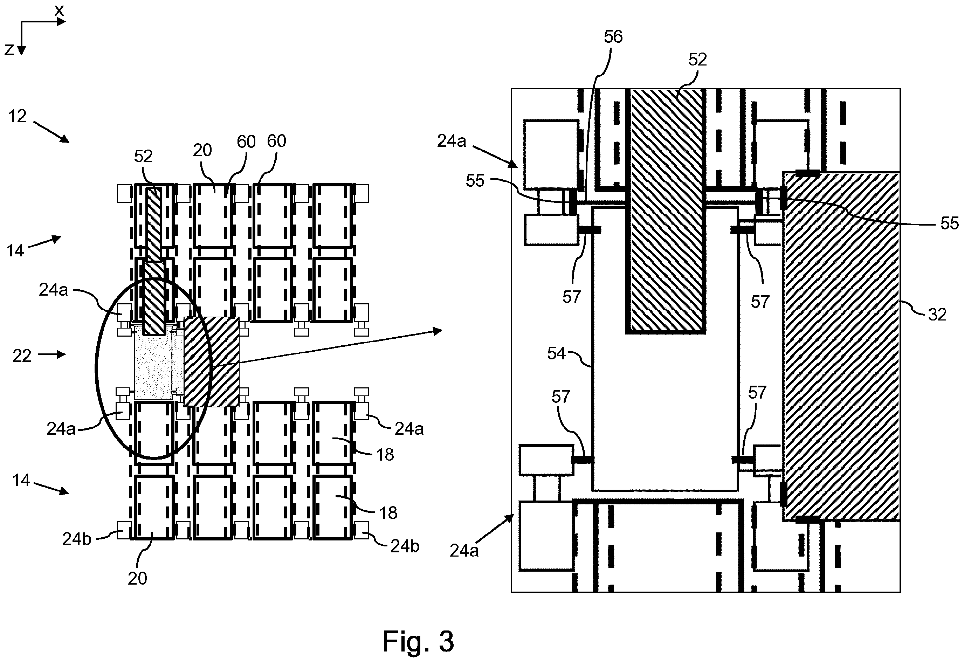

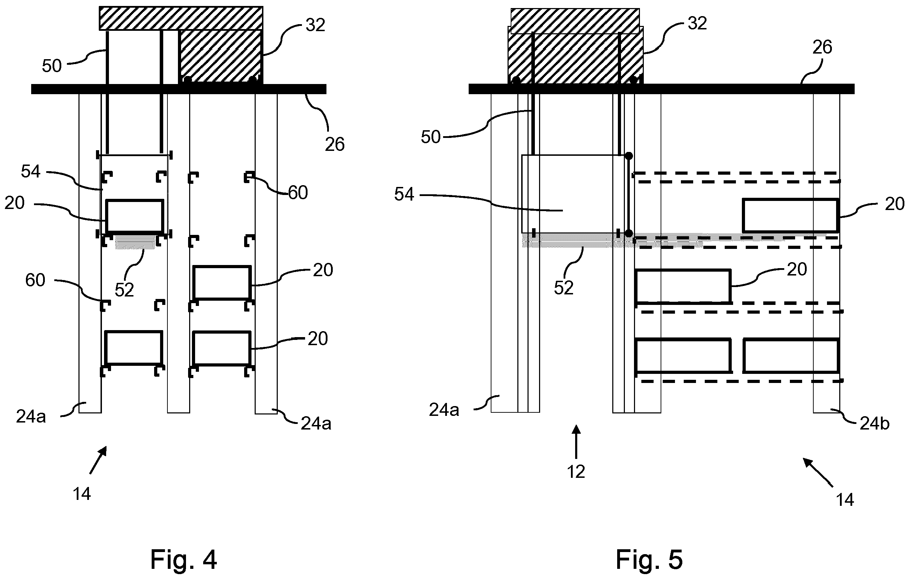

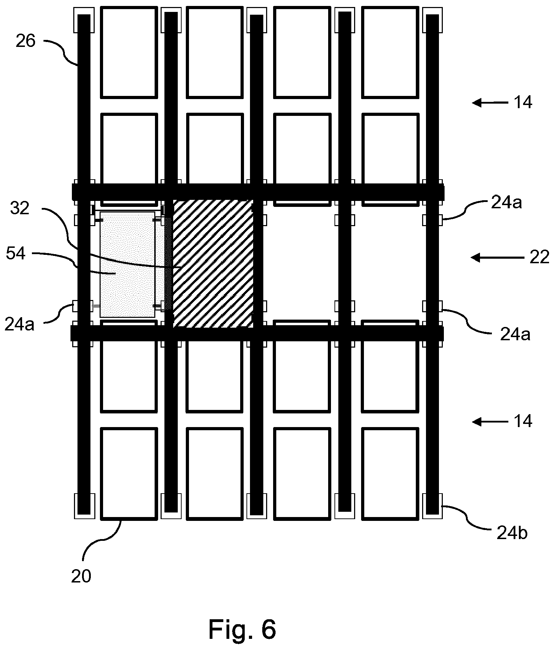

Die Fig. 3-6 zeigen den grundsätzlichen Aufbau eines Lager- und Entnahmesystems mit doppeltiefer Lagerung im Regallager 12 gemäß einem Ausführungsbeispiel der Erfindung in unterschiedlichen Perspektiven, wobei in der in Fig. 3 gezeigten Draufsicht die Gitterstruktur 26 zur deutlichen Erkennbarkeit der Strukturen des darunterliegenden Regallagers 12 ausgeblendet ist.

Danach sind die Lagerregale 14 des Regallagers 12 als klassische Steherregale mit vorderen (d.h. gassenseitigen) und hinteren Stehern 24a,b ausgeführt. Die Steher 24a,b, welche bspw. als Aluminium-Extrusion oder aus profiliertem Stahl gefertigt sein können, leiten Kräfte der Ladungsträger 20 in den Boden, können dynamische Kräfte der Transportfahrzeuge 32 aufnehmen und können zudem die Gitterstruktur 26 tragen. Die Gitterstruktur 26 kann dabei, ggf. unter Verwendung geeigneter Ausgleichselemente, auf den Stehern 24a,b aufliegen und an diesen mit entsprechenden Befestigungsmitteln gegen Verschiebungen, Vibrationen oder sonstige Störungen gesichert sein.

Anstelle einer Ausführung der Lagerregale 14 als Steherregale wäre grundsätzlich auch eine Ausführung als Fachbodenregale denkbar, wobei in diesem Fall die Anzahl der Steher reduziert werden könnte. Generell ist anzumerken, dass bei den im Rahmen der vorliegenden Erfindung zum Einsatz kommenden Regallagern ein klassischer Brandschutz (mit Sprinkleranlage, Wärmestaublechen, Rauchmelder, Rauchabzug, etc.) wie in einem klassischen RBG-Lager ermöglicht ist, was bei einem Blocklager ohne Gassen nicht der Fall ist.

An den Stehern 24a,b sind horizontale Auflagen 60 zur Aufnahme der Ladungsträger 20 angeordnet. Die Auflagen 60 können bspw. in Form von Auflagewinkeln oder Auflageblechen realisiert sein. Alternativ zu einer einfachtiefen Lagerung (d.h. einer Realisierung als Einzelplatzregal) kann dabei auch ein doppeltiefer (wie in Fig. 3 gezeigt) oder ein mehrfachtiefer Regalaufbau realisiert sein. Das LAM 52 der Transportfahrzeuge 32 muss abhängig von der jeweils realisierten Lagertiefe entsprechend angepasst sein.

Wie bereits erwähnt, erfolgt der Zugriff auf die Ladungsträger 20 durch das mittels der Lifteinrichtung 50 des Transportfahrzeugs 32 in der Regalgasse 22 abgesenkte LAM 52. Das LAM 52 ist in Fig. 3 schematisch als teleskopierbare Greif-/Zieheinheit mit Zugriff sowohl auf die gassennahen als auch die gassenfernen Lagerplätze 18 dargestellt. Im Gegensatz zu Blocklagern ohne Regalgassen erfolgt der Zugriff des LAM 52 auf die Ladungsträger 20 somit ohne "vertikales Buddeln/Umlagern", wodurch sich deutlich verbesserte Zugriffszeiten ergeben. Je nach Lagertiefe kann jedoch ein "horizontales Buddeln/Umlagern" notwendig sein, wobei insofern ein Kompromiss zwischen Durchsatz und Kapazität vorgenommen werden muss.

Das Vorhandensein von Regalgassen 22 bei dem erfindungsgemäßen Lager- und Entnahmesystem bietet den weiteren Vorteil einer einfachen Störungsbeseitigung, da über die Regalgasse 22 bei Störungen oder Ausfällen Zugang zu den Transportfahrzeugen 32 besteht. Zudem besteht über die Regalgasse 22 Zugang zum LAM 52 der Transportfahrzeuge 32, sodass etwaige Greiffehler eines LAM 52 an einem Ladungsträger 20 mit entsprechenden Zugangsmitteln behoben werden können. Generell bietet die Regalgasse 22, bei deaktivierten Transportfahrzeugen 32, die Möglichkeit des Zugangs, bspw. für einen Kunden oder Kommissionier-Mitarbeiter.

Zur sicheren Führung des LAM 52 bei der Vertikalbewegung innerhalb einer Regalgasse 22 kann vorgesehen sein, dass das LAM 52 an oder auf einer Hubeinrichtung angeordnet ist, welche wiederum mit der Lifteinrichtung 50 des Transportfahrzeugs 32 gekoppelt ist und welche die Kipp- und Querkräfte des LAM 52 aufnimmt und diese an die Steher 24a,b des Lagerregals 14 abgibt. In dem in den Fig. 3-6 dargestellten Ausführungsbeispiel ist die Hubeinrichtung in Form eines Hubwagens 54 ausgebildet. Dieser weist grundsätzlich einen kastenförmigen Aufbau auf, umfassend eine untere Bodenplatte, eine obere Deckplatte sowie in Längsrichtung (d.h. x-Richtung) der Lagerregale 14 gesehen vordere und hintere, die Boden- und die Deckplatte miteinander verbindende Seitenwände auf. Das LAM 52 ist im Inneren des Hubwagens 54 angeordnet und vorzugsweise an oder auf der Bodenplatte des Hubwagens 54 befestigt.

Um zu vermeiden, dass der Hubwagen 54 (oder generell die Hubeinrichtung, an der das LAM 52 angeordnet ist) bei der Vertikalbewegung innerhalb der Regalgasse 22 Kippbewegungen ausführt oder sich verdreht, sind entsprechende Führungselemente an den Lagerregalen 14 vorgesehen. Die Führungselemente können beispielsweise in ein profiliertes Stahlprofil der Steher 24a integriert sein. Denkbar wäre auch, dass zwei Steher aneinandergestellt werden, wobei an den gassenfernen Steher der weitere Regalbau gefügt wird, während an den gassennahen Steher die Führungselemente angebracht werden.

Gemäß dem dargestellten Ausführungsbeispiel umfasst der Hubwagen 54 Führungsrollen 55, die in einem in den vorderen profilierten Stehern 24a ausgebildeten vertikalen Spalt, dessen Breite auf den Durchmesser der Führungsrollen 55 abgestimmt ist, abrollen. Mit anderen Worten umfasst der vordere Steher 24a eine Einbuchtung, in der die Führungsrollen 55 des Hubwagens 54 verlaufen. Die Einbuchtung kann sich aus einer entsprechenden Profilierung ergeben oder kann dadurch erzeugt sein, dass der vordere Steher 24a aus zwei, mit Abstand (entsprechend der Breite der Einbuchtung) zueinander positionierten Stehern gebildet ist. Die Führungsrollen 55 können dabei, wie in der vergrößerten Ansicht von Fig. 3 zu erkennen, auf einer an dem Hubwagen 54 montierten, in Richtung der Regalgasse 22 verlaufenden Achse 56 vorne und hinten (in x-Richtung gesehen) montiert sein. Wenngleich aus Gründen der Übersichtlichkeit in Fig. 3 nur eine einzige Achse 56 mit zwei Führungsrollen 55 dargestellt ist, kann der Hubwagen 54 je nach Gegebenheit mehrere derartige Achsen 56 (mit jeweils vorderer und hinterer Führungsrolle 55) aufweisen. Eine besonders sichere Führung ergibt sich im Fall von insgesamt vier Achsen 56, nämlich jeweils eine (in y-Richtung gesehen) obere und eine untere Achse 56 auf jeder Regalgassenseite.

Für eine zusätzliche Führung können bei Bedarf noch weitere Führungsrollen 57 am Hubwagen 54 angeordnet sein, welche eingerichtet sind, jeweils an einer dem Hubwagen zugewandten Seitenfläche der vorderen Steher 24a abzurollen, wie in der vergrößerten Ansicht von Fig. 3 gezeigt.

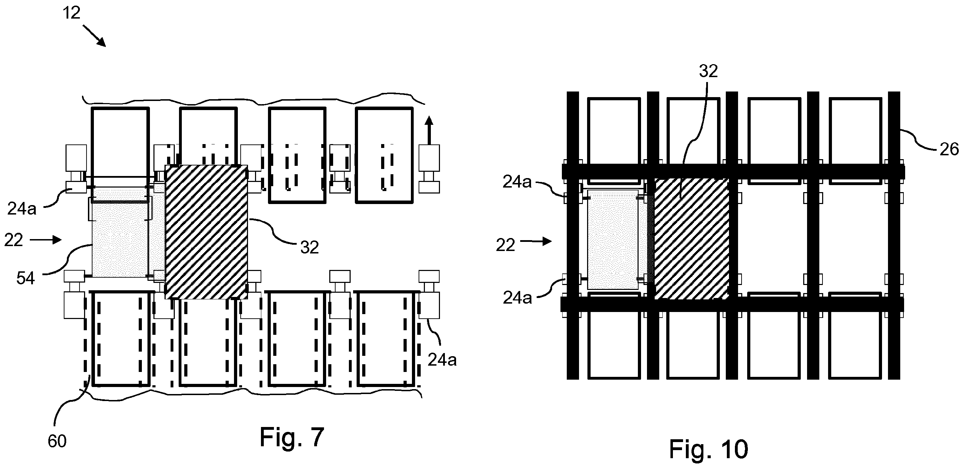

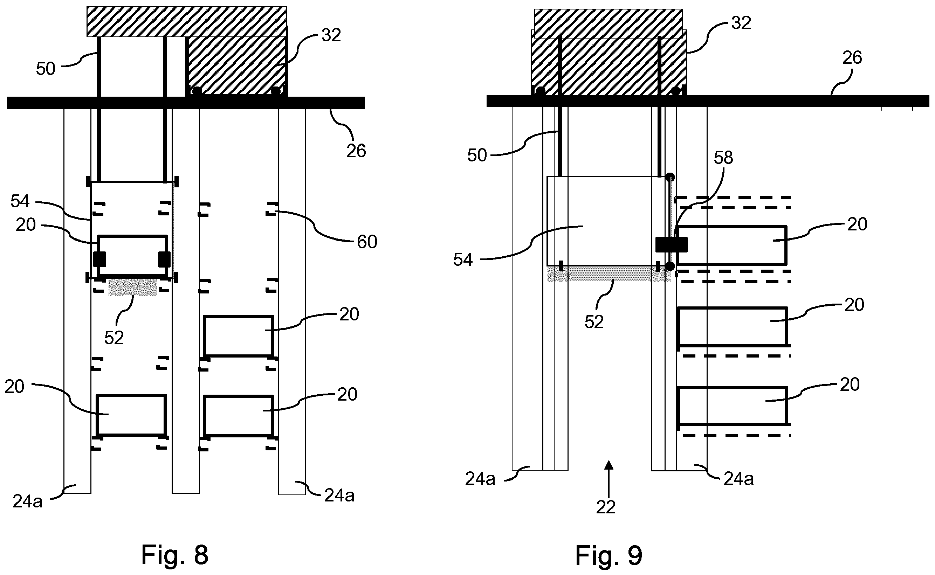

Während die Fig. 3-6 eine Ausführung mit doppeltiefer Lagerung zeigen, sind in den Fig. 7-10 entsprechende Darstellungen einer Ausführung mit einfachtiefer Lagerung gezeigt. Der wesentliche Unterschied besteht darin, dass anstelle eines Teleskops ein vereinfachtes LAM 52 mit Greiftechnik vorgesehen ist. Wie in der Seitenansicht in Fig. 9 schematisch angedeutet, umfasst das LAM 52 einen Greifer 58, der eingerichtet ist, mit einer entsprechenden Griffleiste oder Klammer am Ladungsträger 20 zusammenzuwirken.

Je nach der konkreten Bauart des LAM 52 kann es notwendig oder zumindest vorteilhaft sein, dass die gassennahen Steher 24a der Lagerregale 14 eingerückt positioniert sind, um eine reibungslose Funktionsweise des jeweiligen LAM 52 sicherzustellen. Eine solche eingerückte Position der Steher 24a ist in Fig. 7 für die (in der Bildebene) obere Reihe gezeigt, im Vergleich zu einer nicht eingerückten Position in der unteren Reihe. (Die Kombination dient hier nur zur Veranschaulichung der unterschiedlichen Positionen, wohingegen die Steher in der Praxis auf beiden Gassenseiten gleich positioniert würden).

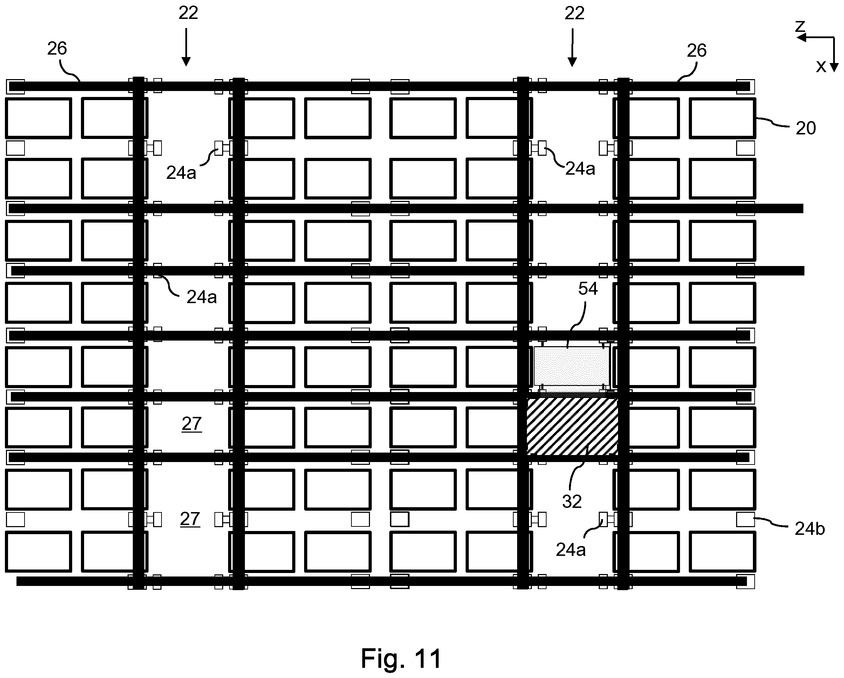

Fig. 11 zeigt ein Lager- und Entnahmesystem gemäß einem Ausführungsbeispiel der Erfindung in einer Draufsicht, wobei aus Gründen der Übersichtlichkeit die Auflagen 60 der Lagerregale 14 ausgeblendet sind. Die Gitterstruktur 26 ist wie auch bereits bei den zuvor beschriebenen Ausführungsbeispielen aus Schienenelementen gebildet, welche die Längs- und Quertransportwege 28a,b für die Transportfahrzeuge 32 bilden. Die Schienen können einspurig oder doppelspurig ausgebildet sein, jeweils angepasst an die Spurweite der Transportfahrzeuge 32. Auch eine Kombination ist denkbar.

Bei dem dargestellten Ausführungsbeispiel ist die Gitterstruktur 26 unregelmäßig ausgebildet, sodass die Gitterstruktur 26 Gitterzellen 27 unterschiedlicher Größe aufweist. Hierbei ist berücksichtigt, dass Schienen quer zu den Regalgassen 22 nicht überall benötigt werden und dementsprechend an einigen Stellen (je nach Anzahl der Transportfahrzeuge 32 und Verkehr an der jeweiligen Stelle) entfallen können, wodurch Material eingespart werden kann. Zudem erlauben die unterschiedlich großen Gitterzellen 27 Transportfahrzeuge 32 nach unten abzulassen, bspw. zur Wartung oder Reparatur. Hierzu könnten vorgegebene Schienenteile demontierbar oder klappbar ausgeführt sein. In einer konkreten Ausführungsform kann vorgesehen sein, dass die Gitterstruktur 26 zur Erreichbarkeit der Lagerplätze 18 im Bereich der Regalgassen 22 durchgängig Schienen als Längstransportwege 28a aufweist und in Bereichen abseits der Regalgasse 22 unterbrochen ist und zumindest bereichsweise keine Längstransportwege 28a oder Quertransportwege 28b aufweist.

Die Transportfahrzeuge 32 können in unterschiedlichen Größen realisiert sein. So kann der "Fußabdruck" eines Transportfahrzeugs 32 bspw. auf eine einzige Gitterzelle 27 limitiert sein, derart dass auf allen Seiten Vorbeifahrten anderer Transportfahrzeuge 32 auf unmittelbar benachbarten Gitterzellen 27 möglich sind. Bei dieser Variante ergibt sich ein hoher Durchsatz sowie ein geringer Demontageaufwand zum Ablassen eines Transportfahrzeugs 32 nach unten (z.B. durch Abschrauben der Räder des Transportfahrzeugs 32). Alternativ kann sich der "Fußabdruck" eines Transportfahrzeugs 32 auch über mehrere Gitterzellen hinweg erstrecken 27. Dies reduziert zwar den Durchsatz, da insgesamt weniger Transportfahrzeuge 32 auf der Gitterstruktur 26 operieren können. Gleichzeitig ergibt sich jedoch eine verbesserte Kippverhinderung, was insbesondere bei einem schweren LAM 52 von Vorteil ist, sowie die Möglichkeit, größere Batterien einzusetzen.

Hinsichtlich der konkreten Bauart der Transportfahrzeuge 32 unterliegt die vorliegende Erfindung grundsätzlich keinerlei Beschränkungen. So können die Transportfahrzeuge 32 einerseits eine Bauart aufweisen, wie sie schematisch in den Fig. 3-10 gezeigt ist. Danach umfasst das Transportfahrzeug 32 einen Fahrzeugkörper, in dem die Fahrzeugtechnik, wie insbesondere die Antriebe und die Batterie, verbaut ist. Der Fahrzeugkörper umfasst darüber hinaus eine seitliche Auskragung, an der die Lifteinrichtung 50 mitsamt der Hubeinrichtung und dem LAM 52 angeordnet sind. Mithin sind Fahrzeugkörper und Behälteraufnahme nebeneinander angeordnet. Alternativ kann eine Bauart zum Einsatz kommen, bei der der Fahrzeugkörper einen inneren Hohlraum zur Behälteraufnahme umfasst, wobei Transportfahrzeuge 32 dieser - für sich gesehen bspw. aus der WO 2019/154467 A1 bekannten - Bauart grundsätzlich als "single-grid" Variante ausgebildet sein können.

Das Ausführungsbeispiel gemäß Fig. 11 zeigt, dass stets mittig über einer Regalgasse 22 ein Grid-Schienenpaar in x-Richtung verläuft, wobei auf der einen Gassenseite die eine Schiene und auf der anderen Gassenseite die andere Schiene des Schienenpaares verläuft. Diese x-Schiene wird benötigt, um die Ladungsträger 20 aller Lagerplätze 18 der jeweiligen Lagerregale 14 bedienen zu können. Ein Wechseln dieser x-Schiene zur benachbarten x-Schiene oder zu einem Arbeitsplatz erfolgt über die z-Schienen. Diese können in variabler Zahl verbaut werden, da sie zur Bedienung der Lagerplätze 18 nicht zwingend notwendig sind. (Dabei kann bspw. vorgesehen sein, dass mehr z-Schienen an hoch frequentierten Abschnitten wie Arbeitsplätzen verbaut sind.) Eine Kreuzung von x- und z-Schiene erfolgt so, dass im Kreuzungsbereich ein Behälter durch die jeweilige Öffnung (= Gitterzelle) gefördert werden kann. Das z-Schienenpaar ist dazu so angeordnet, dass die beiden Schienen beidseits der Behälter angeordnet sind. Zusätzlich zu den zwingend notwendigen x-Schienen über den Regalgassen 22 können weitere x-Schienen über dem Regal 14 angeordnet werden um für mehr Lagerroboter, d.h. Transportfahrzeuge 32, ausreichend Ausweichmöglichkeiten zu schaffen. Die Position dieser weiteren x-Schienen ist nicht an irgendwelche Lagerplätze 18 gebunden, sondern lediglich an die Abmessungen der Transportfahrzeuge 32.

Je nach Lageraufbau in einem Kundenprojekt kann die Einführung von Einbahnstraßen sinnvoll sein, um eine Art horizontale Kreisbewegung der Transportfahrzeuge 32 vorzugeben, so dass Blockaden vermieden werden. Dabei kann bspw. über eine Regalgasse 1 eine Bewegung ausschließlich in +x Richtung und über eine Regalgasse 2 eine Bewegung ausschließlich in -x Richtung erfolgen, wobei zwischen den Gassen in z-Richtung abgekürzt und ggf. über eine zusätzliche x-Strecke zwischen Gasse 1 und 2 überholt werden kann. Ein Überholen kann dabei insbesondere dann ausgeführt werden, falls ein Transportfahrzeug 32 parkt, um mit dem LAM 52 einen Ladungsträger 20 im Regal aufzunehmen oder abzugeben.

Wie im oberen Bereich von Fig. 11 angedeutet, kann die Gitterstruktur 26 über das Regallager 12 hinaus erweitert sein. Über diese Erweiterung kann beispielsweise eine Anbindung an entfernte Regale oder entfernte Arbeitsplätze über ein entsprechendes Schienensystem erfolgen. Durch den Transport über Schienensysteme unterhalb der Hallendecke ergibt sich am Hallenboden viel Platz und somit Flexibilität. Über die gezeigte Erweiterung kann auch eine Anbindung an externe Heber zum Heben/Absenken von Ladungsträgern und/oder ein Anschluss an einen oder mehrere Wartungsplätze zum Einsetzen/Entnehmen von Wartungsrobotern.

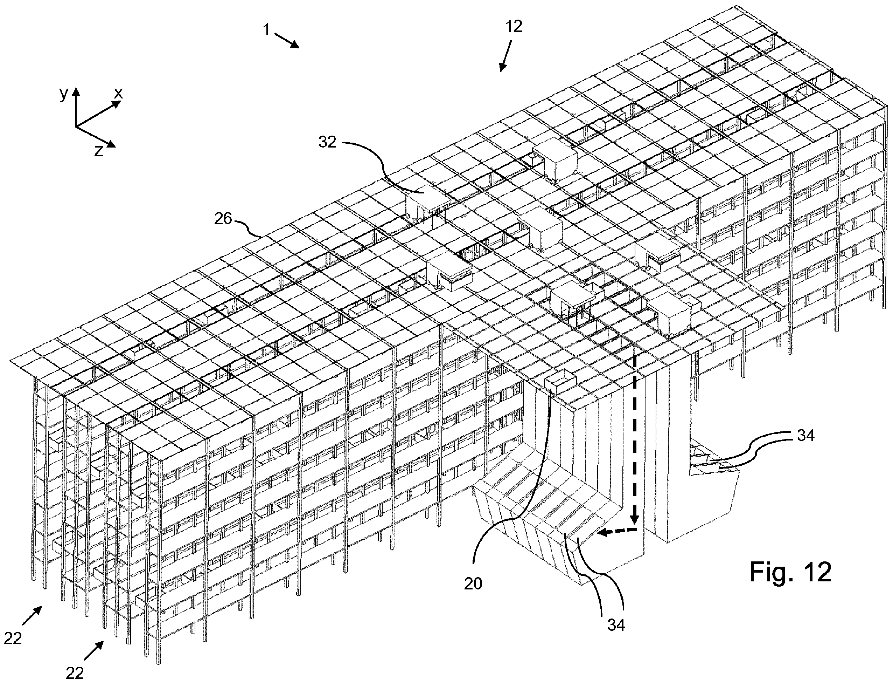

Fig. 12 zeigt in perspektivischer Darstellung ein weiteres Ausführungsbeispiel eines erfindungsgemäßen Lager- und Entnahmesystems. Danach ist eine Reihe von Arbeitsplätzen 34 beabstandet zu dem Regallager 12 angeordnet. Die Gitterstruktur 26 erstreckt sich über das eigentliche Regallager 12 hinaus, derart, dass die Gitterstruktur 26 das Regallager 12 und die Arbeitsplätze 34 miteinander verbindet. In dem dargestellten Ausführungsbeispiel überdeckt die Gitterstruktur 26 zudem nicht das gesamte Regallager 12, sondern ist nur oberhalb eines Teilbereichs des Regallagers 12 ausgebildet. Eine komplette Überdeckung wie in den zuvor beschriebenen Beispielen ist jedoch ebenfalls möglich.

Wie in Fig. 12 zu erkennen, steht jeder der Arbeitsplätze 34 mit einer definierten Gitterzelle 27 in dem über das Regallager 12 hinausragenden Bereich der Gitterstruktur 26 in Verbindung. Wie durch den gestrichelten vertikalen Pfeil angedeutet, kann ein Transportfahrzeug 32 einen bspw. im Rahmen eines Kommissionierungsauftrags angefragten Ladungsträger 20 über die entsprechende Gitterzelle 27 zu dem jeweiligen Arbeitsplatz 34 absenken.

Unabhängig von der konkreten Darstellung in Fig. 12, können die an ein erfindungsgemäßes Lager- und Entnahmesystem ankoppelnden Arbeitsplätze 34 auf unterschiedliche Weise realisiert sein:
Aktive Arbeitsplätze: Ladungsträger 20 werden wie beschrieben von den Transportfahrzeugen 32 abgelassen. Auf Höhe des Arbeitsplatzes werden die Ladungsträger 20 vom Transportfahrzeug 32 entnommen und über eine Fördertechnik, Heber/Wippen, rotierende Arme, eine Scheibe oder dergleichen zum Kommissionierer bewegt.

Passive Arbeitsplätze: Wie durch den gestrichelten horizontalen Pfeil in Fig. 12 angedeutet, besteht im Rahmen des erfindungsgemäßen Lager- und Entnahmesystems durch die Ausstattung der Transportfahrzeuge 32 mit einem seitlich abgebenden LAM 52 die Möglichkeit, den Arbeitsplatz 34 passiv auszugestalten. Dabei kann vorgesehen sein, dass ein Ladungsträger 20 von einem Transportfahrzeug auf eine Art Regalplatz abgesenkt wird und von dort mittels des LAM 52 seitlich zum Arbeitsplatz 34 ausgefahren wird. Der Arbeitsplatz 34 selbst kann somit vollkommen passiv ausgestaltet sein. Allerdings sollte der Arbeitsplatz 34 aus Sicherheitsgründen über eine trennende Schutzeinrichtung verfügen, bspw. in Form eines (verriegelbaren) Zugriffsdeckels, welche den Zugriff versperrt, wenn ein Transportfahrzeug 32 einen Ladungsträger 20 tauscht.

Nachdem ein Transportfahrzeug 32 einen Ladungsträger 20 unter dem Deckel eines Arbeitsplatzes 34 abgestellt hat, kann ein ergonomisches Kippen des Ladungsträgers 20 aktiv oder passiv erfolgen. Die aktive Variante kann bspw. mittels eines Stellmotors realisiert werden, der ein waagrechtes Kommissionierfach kippt. Bei der passiven Variante kann vorgesehen sein, dass das Kommissionierfach wie im Regal ausgebildet, aber um einen vorgegebenen Winkel x° gekippt ist, und das Transportfahrzeug 32 den Ladungsträger 20 langsam abstellt (im Falle eines Teleskop LAM 52) bzw. einschiebt (im Falle eines Greifer LAM 52) und der Ladungsträger 20 dabei kippt. Dies kann ebenso beim Aufnehmen eines Ladungsträgers 20 erfolgen, nur andersherum). Gegen ein Behälterrutschen beim vertikalen Absetzen mittels eines Teleskops auf einen schrägen Kommissionierfach kann eine Anti-Rutsch-Beschichtung oder Haken passend zu Rippen im Behälterboden vorgesehen sein.

Vorteilhaft ist, wie in Fig. 12 gut zu erkennen ist, dass sich der Anlieferungsschacht nicht oberhalb des Arbeitsplatzes 34, sondern seitlich versetzt dazu befindet, wodurch der Arbeitsplatz 34 vor etwaigen herabstürzenden Ladungsträgern 20 oder Transportfahrzeugen 32 geschützt ist.

Regal-Arbeitsplätze (Alternative 1): Wie bei einem RBG ist es möglich, dass ein Mitarbeiter von der einen Seite an einem Regal kommissioniert, das von der anderen Seite von einem Roboter/RBG bedient wird. So hat der Mitarbeiter sehr einfach Zugriff auf viele Behälter in einem Regal, was bei einem Blocklager nicht möglich ist. Die Behälter könenn für einen besseren Zugriff auf der Vorderseite zum Kommissionierer eine (verschließbare) Öffnung haben. Der Kommissionierer kann so nur einzelne Ladegüter oder auch den gesamten Ladungsträger entnehmen. Das Kommissionieren kann über SdT unterstützt werden, z.B. Pick by Light oder Pick by Voice.

Regal-Arbeitsplätze (Alternative 2)/ MicroFullfillment: Weiterhin wäre denkbar, dass die Transportfahrzeuge 32 Regalgassen beidseitig automatisch vorbereiten/auffüllen und später dort Mitarbeiter oder Kunden Artikel kommissionieren können (z.B. vollauomatisch nachgefüllter Supermarkt; Micro Fullfillment). Für einen guten Eingriff können hierzu die Behälter unten im Regal vertikal größer beabstandet stehen, um den Eingriff zu vereinfachen (oder Behälter-öffnung wie zuvor), darüber können Behälter für den Nachschub vertikal enger stehen. Sobald Menschen Gassen betreten, kann dieser Bereich für Roboter sicher gesperrt werden (durch Barrieren, STO, usw. auf dem Grid). Transportfahrzeuge 32 können auch deaktiviert werden, wobei die Restgefahr besteht, dass ein Hubwagen abstürzen könnte. Dies kann jedoch dadurch verhindert werden, dass das Transportfahrzeug 32 über ein Regal fährt (keine Person darunter) bzw. sich zwischen zwei Gridplätze positioniert, so dass eine Gridschiene unter dem Hubwagen einen Absturz des Hubwagens verhindert. Der Kunde sieht in diesem Fall nur etwas auffällige Steher (mit Führungen für die Hubwagen), aber sonst ist keinerlei Technik erkennbar (keine Schleifleitung, keine Sensoren, keine Kletterhilfen am Regal, keine FTS-Markierungen am Boden, etc.) Diese Konzepte werden oft in teuren Städten (mit wenig Boden für einen Supermarkt) diskutiert. Auch auf dem Land könnte ein derartiges Konzept (geschlossene) Dorfläden ersetzen. Dazu könnte dieses Konzept auch in einem transportablen Container verbaut werden. Aber auch das typische manuelle Kommissionieren kann so verbessert werden.

Notfall-Arbeitsplätze: Bei Stromausfall oder großen Störungen kann bei einem Blocklager nur auf die obersten Behälter manuell zugegriffen werden, wobei dieser Zugriff zudem unsicher ist. Bei dem erfindungsgemäßen Konzept mit Regalgasse ist über eine Leiter oder Scherenhubbühne (oft batteriebetrieben) ein besserer Zugriff möglich.

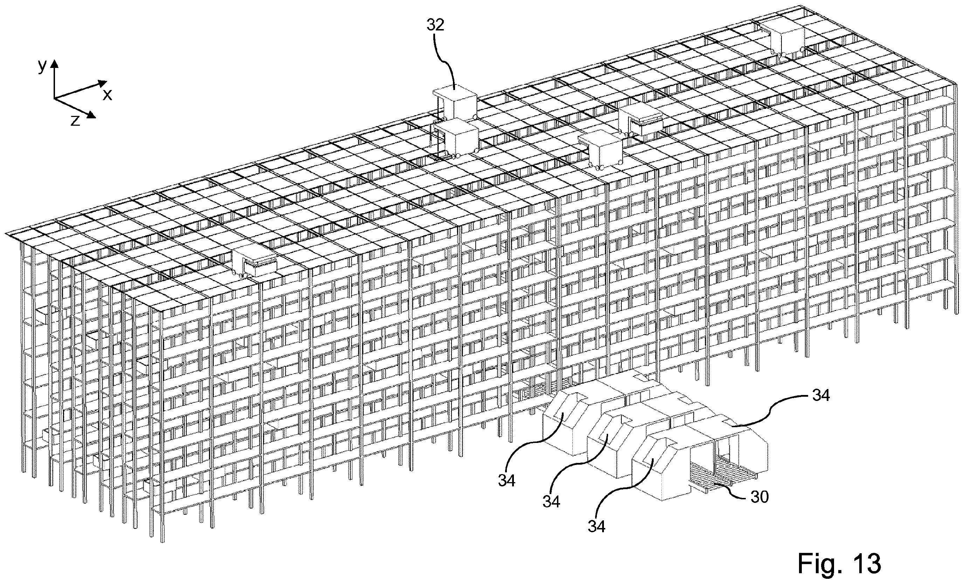

Fig. 13 zeigt in einer perspektivischen Darstellung ein weiteres Ausführungsbeispiel eines erfindungsgemäßen Lager- und Entnahmesystems. Danach umfasst das System eine Fördertechnik 30, die quer (d.h. in z-Richtung verlaufend) im Regallager 12 angeordnet ist und eine Anzahl von Arbeitsplätzen 34 versorgt. Nachdem ein Transportfahrzeug 32, wie oben beschrieben, einen Behälter 20 von einem der Lagerplätze 18 des Regallagers 12 aufgenommen hat, kann es den Behälter 20 zu einer Gitterzelle 27 oberhalb der Fördertechnik 30 transportieren und an diese zum Weitertransport zu dem jeweiligen Arbeitsplatz 34 abgeben.

Ein möglicher Nachteil dieser Ausführung ist die Konzentration von Transportfahrzeugen 32 im Bereich der Fördertechnik 30, um an diese zu übergeben, was ggf. Leistungseinbußen mit sich bringen kann. Zur Abschwächung dieses Effektes können über die Länge des Regallagers 12 mehrere solcher Fördertechniken 30 angeordnet sein. Die Fördertechniken 30 sind dabei vorzugsweise als Loops (= eine erste Bahn führt aus dem Lager heraus und eine zweite Bahn führt in das Lager hinein) ausgeführt. Ein solcher Loop kann auch auseinandergezogen sein, um die Konzentration von Transportfahrzeugen 32 weiter zu entschärfen. Seitlich der Loops könnten zudem separate Übergabeplätze vorgesehen sein, damit nicht "in den Förderfluss" übergeben werden muss, was per se teuer ist.

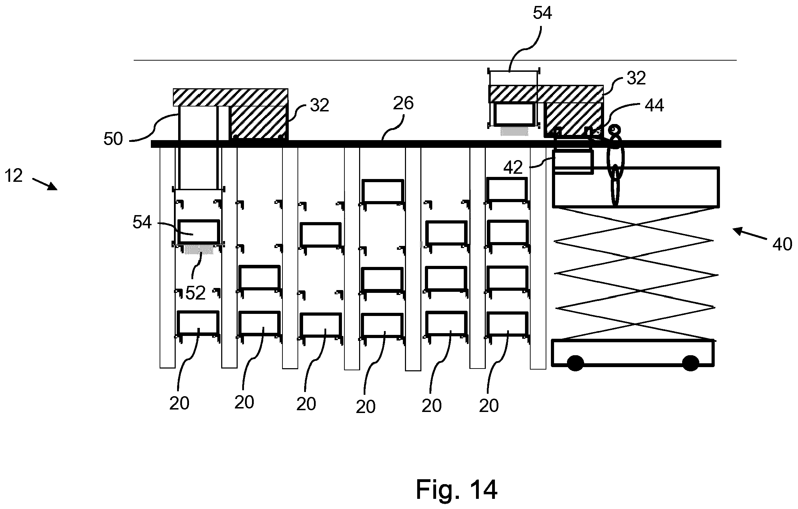

Fig. 14 illustriert in einer schematischen Seitenansicht einen Reparatur- bzw. Bergungsvorgang eines Transportfahrzeugs 32. Dabei wird der mögliche Zugang durch die vorhandenen Regalgassen 22 ausgenutzt, in dem dort ein geeignetes Zugangsmittel (bspw. eine Hubbühne) eingebracht wird, welches innerhalb der Regalgasse 22 verfahrbar ist. In dem dargestellten Ausführungsbeispiel handelt es sich bei dem Zugangsmittel um einen Scherenhubtisch 40. Dadurch, dass sich der Scherenhubtisch 40 in der gesamten Regalgasse 22 bewegen kann (in x- und y-Richtung), lassen sich die folgenden Aufgaben besonders einfach erledigen:
Ladungsträger 20 ausrichten: Techniker können entlang der gesamten Regalgasse 22 über alle Regalebenen hinweg Ladungsträger 20, die während des Betriebs verrutscht oder verschoben wurden, bspw. aufgrund von Greiffehlern des LAM 52 der Transportfahrzeuge 32, richtig ausrichten.

LAM 52 Probleme beheben: Techniker können vor Ort die Handhabung von Ladungsträgern 20 durch das LAM 52 von Transportfahrzeugen 32 überprüfen und etwaige dabei festgestellte Probleme, bspw. Greifprobleme, richten.

Defekte Transportfahrzeuge 32 reparieren: Techniker können, wie in Fig. 14 schematisch angedeutet, defekte Transportfahrzeuge 32 durch die Gitterstruktur 26 hindurch reparieren. Im Normalfall ist davon auszugehen, dass es sich Defekte vor Ort zumindest insoweit beheben lassen, dass das Transportfahrzeug 32 in der Lage ist, selbstständig zu einem Wartungsbereich zu fahren, um dort näher inspiziert und vollständig repariert zu werden. Der Wartungsbereich kann bspw. eine Wartungsbühne umfassen, die neben der Gitterstruktur 26, vorzugsweise auf gleicher Höhe, fest installiert ist.

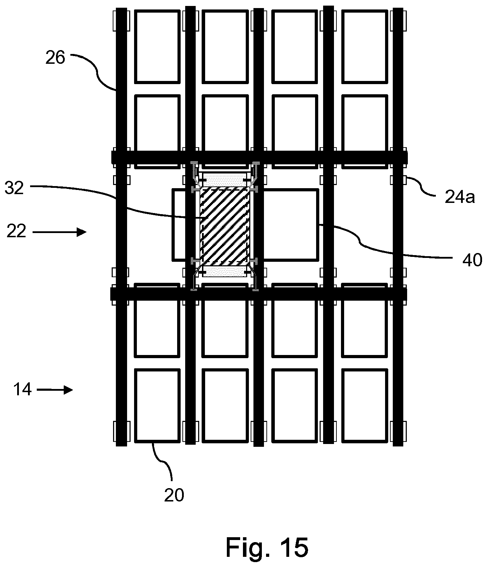

Defekte Transportfahrzeuge 32 aus dem Lagersystem entfernen: Hierzu können, wie in Fig. 14 schematisch angedeutet, weitere Hilfsmittel zum Einsatz kommen. So kann in einem ersten Arbeitsschritt vorgesehen sein, dass das defekte Transportfahrzeug 32 von der Gitterstruktur 26 angehoben wird, bspw. mittels eines Hubtisches 42. Um dabei ein Kippen des Transportfahrzeugs 32 zu verhindern, kann dieses mit Halteklammern 44 am Zugangsmittel 40 fixiert werden. Sodann können Teile des Transportfahrzeugs 32 demontiert werden, insbesondere die Fahrrollen mit Rollenaufhängungen sowie die Hubeinrichtung. Im Falle eines Single-Grid-Roboters (s. Fig. 15) ist dies bereits ausreichend, sodass das Transportfahrzeug 32 an jeder Stelle durch die Gitterstruktur 26 nach unten abgelassen und mit dem Zugangsmittel 40 aus der Regalgasse 22 gefahren werden kann.

Im Falle eines größeren Transportfahrzeugs 32 wird entweder eine weiterreichende Demontage vorgenommen, oder das Transportfahrzeug 32 wird unter Zuhilfenahme des Zugangsmittels 40 zunächst zu einer Position innerhalb der Regalgasse 22 bewegt, an der eine hinreichend große Gitteröffnung vorhanden oder durch Demontieren oder Wegklappen von Schienenteilen erzeugbar ist. In dieser Position kann das Transportfahrzeug 32 sodann nach unten abgelassen und mit dem Zugangsmittel 40 aus der Regalgasse 22 gefahren werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 10: Lager- und Entnahmesystem
- 12: Regallager
- 14: Lagerregal
- 16: Regalebene
- 18: Lagerplatz
- 20: Ladungsträger
- 22: Regalgasse
- 24a,b: Regalsteher
- 26: Gitterstruktur
- 27: Gitterzelle
- 28a: Längstransportweg
- 28b: Quertransportweg
- 30: Fördertechnik
- 32: Transportfahrzeug
- 34: Arbeitsplatz
- 36: Kopplungsschacht
- 40: Scherenhubtisch
- 42: Hubtisch
- 44: Halteklammer
- 50: Lifteinrichtung
- 52: Lastaufnahmemittel, LAM
- 54: Hubwagen
- 55: Führungsrolle
- 56: Achse
- 57: Führungsrolle
- 58: Greifer
- 60: Auflage

## Patentansprüche

1. Lager- und Entnahmesystem für Ladungsträger, umfassend:
ein Regallager (12) mit einer Mehrzahl von sich in einer Längsrichtung (x) erstreckenden Lagerregalen (14), die in einer oder mehreren übereinanderliegenden Regalebenen (16) Lagerplätze (18) für Ladungsträger (20) aufweisen, wobei einige der Lagerregale (14) in einer Querrichtung (z) beabstandet zueinander angeordnet sind, derart, dass zwischen den jeweiligen Lagerregalen (14) eine Regalgasse (22) ausgebildet ist,
**gekennzeichnet durch**
eine oberhalb des Regallagers (12) angeordnete horizontale Gitterstruktur (26), wobei die Gitterstruktur (26) Längstransportwege (28a) in der Längsrichtung (x) der Lagerregale (12) und Quertransportwege (28b) in der Querrichtung (z) der Lagerregale (12) definiert; sowie
mindestens ein zum Fahren auf der Gitterstruktur (26) entlang der Längstransportwege (28a) und/oder der Quertransportwege (28b) ausgebildetes Transportfahrzeug (32) für Ladungsträger (20), wobei das Transportfahrzeug (32) eine in die Regalgasse (22) absenkbare Lifteinrichtung (50) sowie ein mit der Lifteinrichtung (50) gekoppeltes oder koppelbares Lastaufnahmemittel, LAM (52), für Ladungsträger (20) aufweist, wobei das LAM (52) zur seitlichen Aufnahme eines Ladungsträgers (20) von einem Lagerplatz (18) bzw. zur seitlichen Abgabe eines Ladungsträgers (20) an einen Lagerplatz (18) ausgebildet ist.

2. Lager- und Entnahmesystem nach Anspruch 1, **dadurch gekennzeichnet, dass** die Lifteinrichtung (50) des Transportfahrzeugs (32) mit einer eine Hubplattform oder einen Hubwagen (54) umfassenden Hubeinrichtung für Ladungsträger (20) gekoppelt oder koppelbar ist, wobei das LAM (52) auf der Hubplattform oder im Inneren des Hubwagens angeordnet ist.

3. Lager- und Entnahmesystem nach Anspruch 1 oder 2, **dadurch gekennzeichnet, dass** das LAM (52) eine ggf. teleskopierbare Greif- und/oder Zieheinrichtung für Ladungsträger (20) aufweist.

4. Lager- und Entnahmesystem nach Anspruch 1 oder 2, **dadurch gekennzeichnet, dass** das LAM (52) eine seitlich ein- und ausfahrbare Einheit aufweist, die eingerichtet ist, die Ladungsträger (20) zu unterfahren und anzuheben.

5. Lager- und Entnahmesystem nach Anspruch 1 oder 2, **dadurch gekennzeichnet, dass** die Lagerregale (14) zumindest teilweise oder bereichsweise derart ausgebildet sind, dass Lagerplätze (18) mehrfachtief bereitgestellt sind, und dass das LAM (52) als Satellitenfahrzeug ausgestaltet ist, das eingerichtet ist, die mehrfachtiefen Lagerplätze (18) anzufahren und von dort einen Ladungsträger (20) aufzunehmen oder einen Ladungsträger (20) dort abzustellen.

6. Lager- und Entnahmesystem nach einem der Ansprüche 1 bis 5, **dadurch gekennzeichnet, dass** die Hubeinrichtung als von der Lifteinrichtung (50) des Transportfahrzeugs (32) abkoppelbare autonome Einheit ausgebildet ist, die über eine eigene Energieversorgung verfügt.

7. Lager- und Entnahmesystem nach einem der Ansprüche 1 bis 6, **dadurch gekennzeichnet, dass** die Lagerregale (14) regalgassenseitig Führungselemente zur vertikalen Führung der Lifteinrichtung (50) des Transportfahrzeugs (32) und/oder der Hubeinrichtung aufweisen.

8. Lager- und Entnahmesystem nach einem der Ansprüche 1 bis 7, **dadurch gekennzeichnet, dass** die Lifteinrichtung (50) des Transportfahrzeugs (32) und/oder der Hubeinrichtung Führungsrollen (56) umfasst, die vorzugsweise an an den Regalstehern (24a) ausgebildeten Führungselementen abrollen.

9. Lager- und Entnahmesystem nach einem der Ansprüche 1 bis 8, **dadurch gekennzeichnet, dass** die Hubeinrichtung ein rotierendes Teil, insbesondere ein Zahn-, Ketten- oder Zahnriemenrad, umfasst, welches eingerichtet ist, eine formschlüssige Verbindung mit einem entsprechenden Gegenstück an den Regalstehern (24a) der Lagerregale (14) herzustellen, wobei das rotierende Teil einen Geber zur Positionsermittlung der Hubeinrichtung sowie eine in Abhängigkeit von der ermittelten Position der Hubeinrichtung auslösbare Bremse umfasst.

10. Lager- und Entnahmesystem nach einem der Ansprüche 1 bis 9, **dadurch gekennzeichnet, dass** die Gitterstruktur (26) derart auf die Dimensionierung des Regallagers (12) abgestimmt ist, dass jeder Lagerplatz (18) für das mindestens eine Transportfahrzeug (32) über eine Gitterzelle (27) der Gitterstruktur (26) erreichbar ist, und/oder
dass die Gitterstruktur (26) im Bereich der Regalgassen (22) durchgängig Längstransportwege (28a) aufweist und dass die Gitterstruktur (26) in Bereichen abseits der Regalgassen (22) unterbrochen ist und zumindest bereichsweise keine Längstransportwege (28a) oder Quertransportwege (28b) aufweist, und/oder
dass die Gitterstruktur (26) zur Anbindung entfernter Arbeitsplätze (34) und/oder eines Blocklagers zumindest einseitig über das Regallager (12) hinausragt.

11. Lager- und Entnahmesystem nach einem der Ansprüche 1 bis 10, **dadurch gekennzeichnet, dass** die Gitterstruktur (26) eine Anzahl von Gitterzellen (27) aufweist, die jeweils einem Arbeitsplatz (34) zugeordnet sind,
wobei das mindestens eine Transportfahrzeug (32) eingerichtet sein kann, einen als Ziel-Ladungsträger definierten Ladungsträger (20) von einem jeweiligen Lagerplatz (18) aufzunehmen, den Ziel-Ladungsträger in der jeweiligen Regalgasse (22) auf ein Niveau oberhalb der Gitterstruktur (26) anzuheben und zu der einem als Ziel-Arbeitsplatz definierten Arbeitsplatz (34) zugeordneten Gitterzelle (27) zu transportieren.

12. Lager- und Entnahmesystem nach einem der Ansprüche 1 bis 11, **dadurch gekennzeichnet, dass** mindestens eine vorzugsweise in Querrichtung (z) verlaufende, an einen oder mehrere Arbeitsplätze (34) ankoppelnde Fördertechnik (30) in das Regallager (12) integriert ist,
wobei das mindestens eine Transportfahrzeug (32) eingerichtet sein kann, einen als Ziel-Ladungsträger definierten Ladungsträger (20) von einem jeweiligen Lagerplatz (18) aufzunehmen, den Ziel-Ladungsträger in der jeweiligen Regalgasse (22) auf ein Niveau oberhalb der Gitterstruktur (26) anzuheben und an die jeweilige an einen als Ziel-Arbeitsplatz definierten Arbeitsplatz (34) ankoppelnde Fördertechnik (30) abzugeben.

13. Verfahren zum Betreiben eines Lager- und Entnahmesystems nach einem der Ansprüche 1 bis 12, umfassend:
Transportieren eines Ladungsträgers (20) von einem Lagerplatz (18) des Ladungsträgers in einem Lagerregal (14) durch die Gitterstruktur (26) hindurch bis zu einer Ziel- oder Übergabeposition auf der Gitterstruktur (26) durch das mindestens eine Transportfahrzeug (32); und/oder
Transportieren eines Ladungsträgers (20) von einer Quell- oder Übernahmeposition auf der Gitterstruktur (26) durch die Gitterstruktur (26) hindurch bis zu einem Lagerplatz (18) des Ladungsträgers in einem Lagerregal (14) durch das mindestens eine Transportfahrzeug (32).

14. Verfahren nach Anspruch 13, weiterhin umfassend:
Definieren eines Ladungsträgers (20) als einen aus dem Lagerregal (12) auszulagernden Ziel-Ladungsträger;
Anfahren einer durch den Lagerplatz (18) des Ziel-Ladungsträgers definierten Arbeitsposition auf der Gitterstruktur (26) durch das mindestens eine Transportfahrzeug (32);
Absenken der Lifteinrichtung (50) des Transportfahrzeugs (32) auf ein der Regalebene des Lagerplatzes (18) des Ziel-Ladungsträgers entsprechendes Niveau und seitliches Aufnehmen des Ziel-Ladungsträgers durch das Lastaufnahmemittel, LAM (52); und
Anheben des Ziel-Ladungsträgers mittels der Lifteinrichtung (50) auf ein Niveau oberhalb der Gitterstruktur (26) und Transportieren des Ziel-Ladungsträgers zu einer Ziel- oder Übergabeposition, vorzugsweise einem als Ziel-Arbeitsplatz definierten Arbeitsplatz (34).

15. Verfahren nach Anspruche 13 oder 14, weiterhin umfassend:
Definieren eines Ladungsträgers (20) als einen in das Lagerregal (12) einzulagernden Ziel-Ladungsträger;
Transportieren des Ziel-Ladungsträgers durch das mindestens eine Transportfahrzeug (32) von einer Quell- oder Übernahmeposition auf der Gitterstruktur (26) zu einer durch den Lagerplatz (18) des Ziel-Ladungsträgers definierten Arbeitsposition auf der Gitterstruktur (26) durch das mindestens eine Transportfahrzeug (32);
Absenken des Ziel-Ladungsträgers mittels der Lifteinrichtung (50) in die Regalgasse auf ein der Regalebene des Lagerplatzes (18) des Ziel-Ladungsträgers entsprechendes Niveau und seitliches Abgeben des Ziel-Ladungsträgers durch das Lastaufnahmemittel, LAM (52), auf den Lagerplatz (18) des Ziel-Ladungsträgers.
